# EUROPÄISCHE PATENTSCHRIFT

(11) **EP 4 046 231 B1**
(45) Veröffentlichungstag und Bekanntmachung des Hinweises auf die Patenterteilung: **07.01.2026**
(21) Anmeldenummer: 20725995.3
(22) Anmeldetag: 04.05.2020
(51) Int. Cl.: H01M 50/10, H01M 50/20, H01M 10/60, H01M 10/65, H01M 10/613, H01M 10/6556

(54) **GEHÄUSEVORRICHTUNG FÜR TRAKTIONSBATTERIE MIT FLUIDBASIERTER KÜHLUNG MIT VERDAMPFUNGSVORRICHTUNG MIT MIKROKANÄLEN**
HOUSING DEVICE FOR TRACTION BATTERY WITH FLUID-BASED COOLING FUNCTION, COMPRISING EVAPORATION DEVICE WITH MICROCHANNELS
DISPOSITIF DE LOGEMENT POUR BATTERIE DE TRACTION À FONCTION DE REFROIDISSEMENT À BASE DE FLUIDE COMPRENANT UN DISPOSITIF D'ÉVAPORATION À MICROCANAUX

(30) Priorität: 17.10.2019 DE 102019216050
(43) Veröffentlichungstag der Anmeldung: 24.08.2022
(73) Patentinhaber: Kautex Textron GmbH & Co. KG, 53229 Bonn (DE)
(72) Erfinder: HAAS, Felix, 53129 Bonn (DE); LIPPERHEIDE, Moritz, 53119 Bonn (DE); WOLF, Hartmut, 53639 Königswinter (DE)
(74) Vertreter: Richly & Ritschel Patentanwälte PartG mbB
(86) Internationale Anmeldenummer: PCT/EP2020/062332
(87) Internationale Veröffentlichungsnummer: WO 2021/073782

(56) Entgegenhaltungen:
- WO-A1-2011/094863
- WO-A1-2018/163180
- CN-A- 109 888 431
- DE-A1- 102009 006 216
- JP-A- 2019 035 572

## Beschreibung

Die vorliegende Erfindung betrifft eine Gehäusevorrichtung für eine Traktionsbatterie mit einer fluidbasierten Kühlung, insbesondere eines Fahrzeugs, wobei die Traktionsbatterie eine Mehrzahl Batteriezellen aufweist, mit einem Gehäusekörper, der einen umschlossenen Innenraum mit einer Mehrzahl Aufnahmepositionen zur Aufnahme der Mehrzahl Batteriezellen bildet, wobei ein Bodenbereich des Gehäusekörpers zur Aufnahme von flüssigem Fluid ausgeführt ist, und einer Verdampfungsvorrichtung zur Verdampfung des flüssigen Fluides.

Die vorliegende Erfindung betrifft außerdem eine Traktionsbatterie für ein Fahrzeug mit einer fluidbasierten Kühlung, umfassend eine Gehäusevorrichtung nach einem der vorhergehenden Ansprüche, eine Mehrzahl Batteriezellen, die in Aufnahmepositionen in einem Innenraum eines Gehäusekörpers der Gehäusevorrichtung aufgenommen sind, und ein flüssiges Fluid, das in einem Bodenbereich des Gehäusekörpers aufgenommen ist.

Aus dem Stand der Technik sind verschiedene Arten von Hochleistungsbatterien bekannt. In solchen Hochleistungsbatterien, wie sie beispielsweise als Traktionsbatterien von Fahrzeugen mit elektrischem Antrieb Verwendung finden, werden beim Laden und Entladen hohe Leistungen umgesetzt. Solche Hochleistungsbatterien können aktuell mit Spannungen von bis zu mehreren hundert Volt oder sogar bis zu 1000 Volt betrieben werden. Außerdem können aktuell Lade- und Entladeströme von mehreren hundert Ampere bis hin zu 1000 Ampere auftreten. Für zukünftige Entwicklungen sind prinzipiell auch höhere Spannungen und Ströme möglich.

In den Hochleistungsbatterien verursachen die großen Lade- und Entladeströme große thermische Verluste, die zu einer Erwärmung der Hochleistungsbatterien führen. Um die Batterien vor thermischer Beschädigung zu schützen und einen hohen Wirkungsgrad zu erzielen, ist es wichtig, die Hochleistungsbatterien in einem gewünschten Temperaturbereich zu halten. Um ein Überschreiten des Temperaturbereichs zu vermeiden, muss Wärme aus den Batterien abgeführt werden. Dies ist umso wichtiger, je größere Ströme und damit einhergehend größere thermische Verluste auftreten, damit die Batterien auch bei solchen großen Strömen in dem gewünschten Temperaturbereich bleiben. Aktuelle Batteriezellen in Lithium-Ionen Technik arbeiten am besten in einem engen Temperaturbereich von beispielsweise 15° bis 40°C bei einer großen Temperaturhomogenität mit einer Temperaturschwankung von 2 bis 4°C innerhalb der und zwischen den Batteriezellen. Bei solchen Bedingungen können ein sicherer Betrieb der Hochleistungsbatterien und eine lange Lebensdauer mit gleichbleibender Performance erreicht werden.

Um diese Bedingungen sicherzustellen und ein Überschreiten des Temperaturbereichs zu vermeiden, werden Batteriezellen von aktuellen Hochleistungsbatterien im Betrieb, d.h. beim Laden und/oder Entladen, gekühlt. Dabei werden aktuell verschiedene Arten der Kühlung verwendet. So kann beispielsweise eine Flüssigkeitskühlung mit einem von einem flüssigen Wärmetransportmedium durchströmten Wärmeübertrager erfolgen. Der Wärmeübertrager ist meist unter den Batteriezellen angeordnet, wobei der Wärmeübertrager über einen Kontaktwärmeübergang wärmeleitfähig mit den Batteriezellen verbunden ist. Dabei wird die Wärmekapazität des flüssigen Wärmetransportmediums verwendet, um von den Batteriezellen bzw. der jeweiligen Batterie insgesamt abgegebene Wärme über eine Temperaturdifferenz aufzunehmen und entweder direkt an die Umgebung oder über einen Klimakreislauf abzugeben. Als Wärmetransportmedium werden dabei beispielsweise Wasser oder eine Wasser-Glykol-Mischung verwendet, weshalb eine zuverlässige Trennung des Wärmetransportmediums von den Batteriezellen erforderlich ist.

Eine ähnliche Kühlung kann auch mit Luft als Wärmetransportmedium realisiert werden. Da Luft im Gegensatz zu Wasser nicht elektrisch leitend ist, können die Batteriezellen in direktem Kontakt mit dem Wärmetransportmedium stehen und beispielsweise davon umströmt werden. Ein Wärmeübertrager ist daher nicht zwingend erforderlich.

Bei diesen Systemen kann prinzipiell eine aktive oder eine passive Zirkulation des Wärmetransportmediums erfolgen, um die abgegebene Wärme durch Konvektion abzuführen. Bei der passiven Zirkulation erfolgt eine Bewegung des Wärmetransportmediums ausschließlich durch einen Temperaturgradienten innerhalb des Wärmetransportmediums, während bei einer aktiven Zirkulation das Wärmetransportmedium aktiv zirkuliert wird, um die Wärme von den Batteriezellen abzuführen.

Als Weiterentwicklung der Flüssigkeitskühlung mit einem Wärmeübertrager in Kontakt zu den Batteriezellen kann das flüssige Wärmetransportmedium durch die Wärmeaufnahme von dem Wärmeübertrager verdampft werden, was zu höheren Wärmeübergängen und durch die Verdampfungsenthalpie zu einer hohen Wärmeaufnahme pro Masse des Wärmetransportmediums führt. Nach einer Kondensation kann das Wärmetransportmedium wieder dem Wärmeübertrager im flüssigen Zustand zugeführt werden.

Teilweise sind auch Systeme zur Kühlung mit einem flüssigen Wärmetransportmedium in der Entwicklung, beispielsweise bei der industriellen Anwendung für Hochvolt-Traktionsbatterien, die auf einen Wärmeübertrager in Kontakt mit den Batteriezellen verzichten. Vergleichbar mit der Verwendung von Luft als Wärmetransportmedium, erfolgt die Kühlung über eine direkte Umströmung der zu kühlenden Komponenten mit dem flüssigen Wärmetransportmedium. Eine wichtige Eigenschaft des flüssigen Wärmetransportmediums ist daher dessen Dielektrizität, da das Wärmetransportmedium in direktem Kontakt mit den Batteriezellen steht, d.h. mit elektrisch leitenden und potentialführenden Komponenten. Darüber hinaus kann auch bei dem dielektrischen, flüssigen Wärmetransportmedium dessen Verdampfungsenthalpie und der damit verbundene hohe Wärmeübergang genutzt werden, wenn das Wärmetransportmedium durch den Wärmeeintrag von den zu kühlenden Batteriezellen während des Wärmeüberganges verdampft. Eine solche Kühlung wird als Zwei-Phasen Immersionskühlung bezeichnet.

Alle diese Systeme haben jedoch Nachteile, so dass weitere Verbesserungen erforderlich sind. So ist es bei der Zwei-Phasen Immersionskühlung erforderlich, dass der gesamte Hohlraum des Batteriepacks mit dem flüssigen Wärmetransportmedium gefüllt ist, was ein hohes Zusatzgewicht verursacht und mit entsprechenden Kosten für das flüssige Wärmetransportmedium einhergeht. Außerdem ist eine Verteilung eines Kühlmediums zwischen den Batteriezellen beispielsweise nicht möglich, ohne bei prismatischen Zellen eine Längsverpressung der Zellen im Batteriemodul zu unterbrechen. Dies erfordert neue Entwicklungen von Batteriemodulen mit mehreren Batteriezellen. Außerdem wird der erforderliche Bauraum der Batteriemodule vergrößert. Bei Systemen mit einer aktiven Zirkulation sind sowohl Gewicht und Energieverbrauch durch zusätzliche Aggregate wie Kompressor oder Pumpe erhöht. Außerdem erfolgt bei einem Stromausfall im Fahrzeug keine Kühlung der Batteriezellen, was insbesondere im Zusammenhang mit einer zuvor hohen Leistungsabgabe problematisch ist und zu einem Wärmestau führen kann. Im Extremfall können sich überhitze Batteriezellen entzünden, was potentiell sehr gefährlich ist.

Im Stand der Technik ist beispielsweise aus Dokument JP 2019 035572 A eine Vorrichtung bekannt zur Anpassung einer Batterietemperatur, im Weiteren auch als Batteriekühlvorrichtung bezeichnet. Die Batterie umfasst eine Mehrzahl Batteriezellen. Die Batteriekühlvorrichtung umfasst einen Kühlkreislauf mit einem Verdampfer und einem Kondensator, in dem ein Arbeitsfluid zirkuliert. Der Verdampfer umfasst eine Wärmetauschereinheit mit einer Zuführung und einem Auslass. Die Wärmetauschereinheit ist mir einer batterieseitigen Oberfläche thermisch leitfähig verbunden. Dazu ist ein Wärmetauschermaterial zwischen der Wärmetauschereinheit und der batterieseitigen Oberfläche angeordnet. Eine Mehrzahl Verdampferkanäle erstrecken sich in vertikaler Richtung durch die Wärmetauschereinheit. In den Verdampferkanälen verdampft das Arbeitsfluid durch von der Batterie abgegebene Wärme.

Dokument CN 109 888 431 A betrifft ein Batterie-Wärmemanagementsystem mit einem ersten und zweiten Kühler. Der erste Kühler umfasst eine wärmeleitende Seitenplatte zur Befestigung auf der Batterieoberfläche, wobei Kapillare vertikal innerhalb der wärmeleitenden Seitenplatte und einer aufnehmenden Flüssigkeitskammer angeordnet sind. Ein wärmeleitender Seitenplattenboden ist an der wärmeleitenden Seitenplatte befestigt. Ein Fluid wird als Phasenänderungsmaterial in die aufnehmende Flüssigkeitskammer eingebracht, wobei die Kapillare mit dem Phasenänderungsmaterial in der Flüssigkeit aufnehmenden zweiten Kammer verbunden sind.

Aus dem Dokument WO 2018 163 180 A1 ein System zur Regelung der Temperatur von Energiespeichervorrichtungen mit jeweils einem oder mehreren Mikrokanalverdampfern bekannt. Die Systeme umfassen außerdem Kondensatoren und eine oder mehrere Flüssigkeitsstromleitungen. Während des Betriebs wird flüssiges Kühlmittel zu den Mikrokanalverdampfern geleitet, die in thermischer Verbindung mit der Energiespeichervorrichtung stehen, so dass Wärmeenergie von der Energiespeichereinrichtung auf das flüssige Kühlmittel übertragen wird und das flüssige Kühlmittel einen Phasenübergang zu einem Dampfkühlmittel erfährt. Das dampfförmige Kühlmittel wird dann in den Kondensator geleitet und durchläuft einen weiteren Phasenübergang, um als flüssiges Kühlmittel zu den Mikrokanalverdampfern zurückgeführt zu werden.

Dokument WO 2011 094 863 A1 betrifft eine Wärmetauscherstruktur zur Verwendung in einer Batterieeinheit, die einen ersten Batteriestapel mit einer Vielzahl von Batteriezellen und einen zweiten Batteriestapel mit einer Vielzahl von Batteriezellen umfasst. Die Wärmetauscherstruktur ist zwischen gegenüberliegenden Oberflächen des ersten Batteriestapels und des zweiten Batteriestapels angeordnet und definiert einen oder mehrere Fluidströmungskanäle, wobei die Wärmetauscherstruktur dimensionsmäßig nachgiebig ist, um sich unter Ausdehnung des ersten und des zweiten Batteriestapels zu komprimieren und unter nachfolgender Kontraktion des ersten und des zweiten Batteriestapels auszudehnen.

Aus dem Dokument DE 10 2009 006 216 A1 ist eine Kühlvorrichtung für elektrische Elemente bekannt. Die Kühlvorrichtung weist ein Gehäuse auf, in dem die elektrischen Elemente angeordnet sind und in dem die elektrischen Elemente mit einer inerten Flüssigkeit im Wärmeaustausch stehen. Durch den Wärmeaustausch verdampft und kondensiert die Flüssigkeit im Gehäuse. Zwischen den elektrischen Elementen sind Zwischenräume angeordnet, die die inerte Flüssigkeit und entweder ein körniges Schüttgut oder eine gitterartige Struktur enthalten, um die Menge der inerten Flüssigkeit zu minimieren.

Der vorliegenden Erfindung liegt die Aufgabe zugrunde, eine Gehäusevorrichtung für eine Traktionsbatterie eines Fahrzeugs mit einer fluidbasierten Kühlung und eine Traktionsbatterie mit einer solchen Gehäusevorrichtung bereitzustellen, die eine effiziente Kühlung von Batteriezellen der Traktionsbatterie bei einem geringen Gewicht und einer hohen Zuverlässigkeit ermöglichen.

Die der vorliegenden Erfindung zugrundeliegende Aufgabe wird durch eine Gehäusevorrichtung mit den Merkmalen des Anspruchs 1 gelöst. Vorteilhafte Ausgestaltungen der Gehäusevorrichtung sind in den von Anspruch 1 abhängigen Ansprüchen beschrieben.

Im Genaueren wird die der vorliegenden Erfindung zugrundeliegende Aufgabe durch eine Gehäusevorrichtung für eine Traktionsbatterie mit einer fluidbasierten Kühlung, insbesondere eines Fahrzeugs, wobei die Traktionsbatterie eine Mehrzahl Batteriezellen aufweist, mit einem Gehäusekörper, der einen umschlossenen Innenraum mit einer Mehrzahl Aufnahmepositionen zur Aufnahme der Mehrzahl Batteriezellen bildet, wobei ein Bodenbereich des Gehäusekörpers zur Aufnahme von flüssigem Fluid ausgeführt ist, und einer Verdampfungsvorrichtung zur Verdampfung des flüssigen Fluides, wobei die Verdampfungsvorrichtung eine Mehrzahl von Mikrokanalstrukturen zur Bildung von Mikrokanälen aufweist, die Mikrokanalstrukturen sich im montierten Zustand in einer vertikalen Richtung erstrecken und an ihrem in vertikaler Richtung unteren Bereich wenigstens eine Einlassöffnung zur Aufnahme von flüssigem Fluid aus dem Bodenbereich des Gehäusekörpers aufweisen, und im Betrieb flüssiges Fluid durch die wenigstens eine Einlassöffnung in die Mikrokanäle eintritt und ein Wärmetransport von den Batteriezellen zu dem flüssigen Fluid in den Mikrokanälen erfolgt, wodurch das flüssige Fluid in der Verdampfungsvorrichtung verdampft, wobei die Verdampfungsvorrichtung wenigstens ein Verdampfungselement aufweist, und das wenigstens eine Verdampfungselement einen Verdampfungskörper mit einer Mehrzahl Mikrokanalstrukturen zur Bildung der Mikrokanäle aufweist, gelöst.

Die erfindungsgemäße Gehäusevorrichtung ist dadurch gekennzeichnet ist, dass die Mehrzahl Mikrokanalstrukturen zu wenigstens einer Seitenfläche des jeweiligen Verdampfungselements geöffnet sind, und die Mikrokanäle im montierten Zustand durch die Anordnung des Verdampfungselements mit wenigstens einer seiner Seitenflächen entlang einer oder mehrerer Batteriezellen ausgebildet sind.

Außerdem wird die der vorliegenden Erfindung zugrundeliegende Aufgabe durch eine Traktionsbatterie mit den Merkmalen des Anspruchs 14 gelöst. Eine vorteilhafte Ausgestaltung der Traktionsbatterie ist in dem von Anspruch 14 abhängigen Anspruch 15 beschrieben.

Im Genaueren wird die der vorliegenden Erfindung zugrundeliegende Aufgabe auch durch eine Traktionsbatterie für ein Fahrzeug mit einer fluidbasierten Kühlung, umfassend eine obige Gehäusevorrichtung, eine Mehrzahl Batteriezellen, die in Aufnahmepositionen in einem Innenraum eines Gehäusekörpers der Gehäusevorrichtung aufgenommen sind, und ein flüssiges Fluid, das in einem Bodenbereich des Gehäusekörpers aufgenommen ist, gelöst.

Die erfindungsgemäße Gehäusevorrichtung ermöglicht durch die Ausbildung der Mikrokanäle in der Verdampfungsvorrichtung eine besonders effiziente Kühlung von in den Aufnahmepositionen aufgenommenen Batteriezellen im Betrieb, wobei ein hoher Energieeintrag aus den Batteriezellen durch das Verdampfen des flüssigen Fluides erzielt wird. Dadurch kann die Traktionsbatterie effizient geladen und auch entladen werden, wobei hohe Spannungen und Ströme verwendet werden können.

Das flüssige Fluid tritt im Betrieb aus dem Bodenbereich des Gehäusekörpers durch die wenigstens eine Einlassöffnung in die jeweiligen Mikrokanäle ein, so dass es dort verdampfen kann. Das Verdampfen des flüssigen Fluides erfolgt insbesondere an Innenseiten der Mikrokanäle, über die der Wärmetransport zum Verdampfen des flüssigen Fluides erfolgt. Es erfolgt vorzugsweise eine möglichst umfassende Benetzung der Mikrokanäle an den Innenseiten, so dass eine große Fläche der Mikrokanäle für die Übertragung von Wärme von den Batteriezellen an das flüssige Fluid genutzt werden kann und die Kühlung effektiv arbeiten kann. Eine solche Benetzung der Kanäle kann durch die Fluidbewegung durch die Mikrokanäle während des Verdampfungsvorganges erfolgen. So kann beispielsweise verdampftes Fluid noch nicht verdampftes, flüssiges Fluid mitreißen, so dass sich dieses flüssige Fluid an den Innenseiten der Mikrokanäle ablagern kann. Die Benetzung hängt unter anderem von einer Oberflächenspannung des flüssigen Fluides ab.

Im Betrieb kann beispielsweise eine teilweise Befüllung der Mikrokanäle mit flüssigem Fluid vorliegen, wobei die Mikrokanäle beispielsweise zu 0% bis 50% mit flüssigem Fluid gefüllt sind, vorzugsweise 0% bis 30%, besonders bevorzugt 0% bis 15%. Vorzugsweise sind die Mikrokanäle mit einer möglichst geringen Menge flüssigen Fluides gefüllt, um die Gesamtmenge des Fluides gering zu halten. Die Fluidkanäle sind dabei also teilweise in das in dem Bodenbereich befindliche flüssige Fluid eingetaucht. Eine vollständige Befüllung der Gehäusevorrichtung oder der Mikrokanäle kann entfallen, so dass die Traktionsbatterie mit einem geringen Gewicht bereitgestellt werden kann.

Es ist jedoch nicht erforderlich, dass die Mikrokanäle im Betrieb teilweise mit dem flüssige Fluid gefüllt sind. Beispielsweise kann sich im Bereich der wenigstens einen Einlassöffnung ein Gemisch aus flüssigem und gasförmigen Fluid bilden oder durch die wenigstens eine Einlassöffnung in die jeweiligen Mikrokanäle eintreten. Dies ist prinzipiell ausreichend, um eine Benetzung der Innenseiten der Fluidkanäle zu bewirken, um die Kühlwirkung durch das Verdampfen des flüssigen Fluides in den Mikrokanälen sicherzustellen. Dadurch kann die Gesamtmenge des benötigten Fluides weiter reduziert werden.

Über die wenigstens eine Einlassöffnung kann das flüssige Fluid allein oder als Gemisch mit gasförmigen Fluid in die Mikrokanäle eintreten, um einen kontinuierlichen Transport des flüssigen Fluides der Mikrokanäle zu bewirken.

Durch den Aufbau der Gehäusevorrichtung und der Traktionsbatterie wird eine zwei-Phasen Immersionskühlung gebildet, wobei eine starke Kühlwirkung durch das Verdampfen des Fluides in den Mikrokanälen und die Aufnahme der dafür erforderlichen Verdampfungswärme erreicht wird. Nach dem Verdampfen kondensiert das Fluid wieder in einer Kondensierungsvorrichtung, um die Wärme an die Umgebung abzugeben und einen idealerweise geschlossenen Fluidkreislauf zu ermöglichen, wodurch Verluste des Fluides vermieden werden können.

Die Batteriezellen können einzeln oder als Einheiten/Blöcke/Module mit mehreren Batteriezellen in den Aufnahmepositionen aufgenommen werden. Es können also auch mehrere Batteriezellen gemeinsam in jeweils einer Aufnahmeposition aufgenommen werden.

Die Mikrokanäle weisen Abmessungen auf, die ein Einströmen des flüssigen Fluides aus dem Bodenbereich und ein Aufsteigen und Ausströmen von verdampftem Fluid ermöglichen. Die Mikrokanäle können einen rechteckigen, quadratischen, trapezförmigen, runden oder ovalen Querschnitt aufweisen. Die Mikrokanäle können beispielsweise einen Durchmesser oder Seitenlängen von weniger als einem Zentimeter, insbesondere von weniger als fünf Millimetern, beispielsweise von etwa zwei Millimetern aufweisen. Die Mikrokanäle sind an ihrer Oberseite geöffnet, so dass das verdampfte Fluid an der Oberseite aus den Mikrokanälen ausströmen kann. Das Fluid strömt also von der wenigstens einen Einlassöffnung durch die Mikrokanäle zu deren Oberseite, wo es als gasförmiges Fluid austritt.

Die Mikrokanalstrukturen dienen der Bildung der Mikrokanäle, wobei die Mikrokanäle unmittelbar in der Verdampfungsvorrichtung ausgebildet sein können, oder bei der Montage der Traktionsbatterie durch die Anordnung der Batteriezellen in den Aufnahmepositionen und die Anbringung der Verdampfungsvorrichtung gebildet werden. Die Mikrokanalstrukturen können beispielsweise reihenartig oder matrixartig angeordnet sein. Dabei sind die Mikrokanalstrukturen vorzugsweise gleichmäßig verteilt, um die Batteriezellen der Traktionsbatterie gleichermaßen zu kühlen. Die Verdampfungsvorrichtung weist typischerweise eine ähnliche oder größere vertikale Erstreckung wie/als die Batteriezellen auf, um einen möglichst großflächigen Wärmeübergang zu ermöglichen. Die Mikrokanalstrukturen erstrecken sich vorzugsweise über eine gesamte vertikale Ausdehnung der Batteriezellen.

Der montierte Zustand betrifft einen Zustand, in dem die Batteriezellen in die Aufnahmepositionen eingeführt und darin aufgenommen sind und die Verdampfungsvorrichtung gemeinsam damit angeordnet ist. Dies ist beispielsweise in der fertigen Traktionsbatterie der Fall.

Das Erstrecken der Mikrokanäle bzw. der Mikrokanalstrukturen in einer vertikalen Richtung bedeutet, dass die Mehrzahl Mikrokanalstrukturen eine Haupterstreckungsrichtung aufweisen, die mit der vertikalen Richtung übereinstimmt. Zusätzlich können sich die Mikrokanalstrukturen in einer anderen Richtung erstrecken. Dabei ist es nicht erforderlich, dass sich die Mikrokanalstrukturen geradlinig in der vertikalen Richtung erstrecken.

Die Verdampfungsvorrichtung ist ein Wärmeübertrager oder Wärmetauscher, in dem Wärme von den Batteriezellen an das flüssige Fluid übertragen wird, so dass dieses verdampfen kann. Eine solche Verdampfungsvorrichtung ist auch als Verdampfer bekannt. Die Verdampfungsvorrichtung ermöglicht eine Wärmeübertragung von den Batteriezellen zu dem flüssigen Fluid. Die Kondensierungsvorrichtung ist ebenfalls ein Wärmeübertrager oder Wärmetauscher, der Wärme von dem gasförmigen Fluid aufnimmt und an eine Umgebung abgibt, so dass das gasförmige Fluid kondensiert. Dadurch wird ein entsprechender Fluidkreislauf gebildet. Eine solche Kondensierungsvorrichtung ist auch als Dampfkondensator oder Verflüssiger bekannt.

Die Mikrokanäle sind vorzugsweise nur an ihren Enden in vertikaler Richtung geöffnet und in Umfangsrichtung im montierten Zustand, wenn die Batteriezellen in den Aufnahmepositionen aufgenommen und zusammen mit der Verdampfungsvorrichtung angeordnet sind, geschlossen.

Die Kühlleistung der Verdampfungsvorrichtung ist insbesondere abhängig von der Anzahl der im montierten Zustand gebildeten Mikrokanäle. Eine Erhöhung der Anzahl der Mikrokanalstrukturen erhöht die Anzahl der Mikrokanäle und damit die Kühlleistung. Dabei kann eine lokale Anordnung der Mikrokanäle gewählt werden, um beispielsweise abhängig von einer lokalen Wärmeerzeugung durch die Batteriezellen eine optimale Wärmeübertragung an das flüssige Fluid zu gewährleisten. Die Kühlleistung ist außerdem abhängig von Abmessungen der im montierten Zustand gebildeten Mikrokanäle, so dass auch darüber die Kühlleistung dimensioniert werden kann.

Das dielektrische Fluid, das in der Traktionsbatterie verwendet wird und in die Gehäusevorrichtung eingebracht ist, ist elektrisch nicht leitfähig, so dass eine elektrische Isolierung der einzelnen Batteriezellen gebildet wird. Auch der Verdampfungskörper ist aus den gleichen Gründen vorzugsweise aus einem elektrisch nicht leitfähigen Material hergestellt.

Das dielektrische Fluid hat vorzugsweise eine Siedetemperatur von 10°C bis 80°C bei Umgebungsdruck. Durch das Verdampfen des Fluides wird eine maximale Kühlwirkung in den Mikrokanälen erzielt, weshalb eine niedrige Siedetemperatur vorteilhaft ist. Durch das Sieden bei diesen Temperaturen bereits bei Umgebungsdruck, d.h. bei üblicherweise etwa einem bar, kann beispielsweise ein passiver Kühlkreislauf als Zwei-Phasen Kühlkreislauf des Fluides bereitgestellt werden, ohne dass das Fluid von einer Pumpe oder einem Kompressor bewegt werden muss.

Die Traktionsbatterie ist vorzugsweise eine Hochleistungsbatterie, die mit Spannungen von bis zu mehreren hundert Volt oder sogar bis zu 1000 Volt sowie Lade- und Entladeströmen von mehreren hundert Ampere bis hin zu 1000 Ampere betrieben werden kann. Für zukünftige Entwicklungen sind prinzipiell auch höhere Spannungen und Ströme möglich. Um die Hochleistungsbatterie vor thermischer Beschädigung zu schützen und einen hohen Wirkungsgrad zu erzielen, wird die Batterie in einem gewünschten Temperaturbereich gehalten. Aktuelle Batteriezellen solcher Traktionsbatterien sind beispielsweise in Lithium-Ionen Technik hergestellt und arbeiten am besten in einem engen Temperaturbereich von beispielsweise 15° bis 40°C bei einer großen Temperaturhomogenität mit einer Temperaturschwankung von 2 - 4°C innerhalb der und zwischen den Batteriezellen.

In einer vorteilhaften Ausführungsform weist die Verdampfungsvorrichtung wenigstens ein Verdampfungselement auf, und das wenigstens eine Verdampfungselement weist einen Verdampfungskörper mit einer Mehrzahl Mikrokanalstrukturen zur Bildung der Mikrokanäle auf. Durch die Ausgestaltung des wenigstens einen Verdampfungselements mit den Mikrokanalstrukturen kann bereits jedes Verdampfungselement allein zur Kühlung der Batteriezellen beitragen. Die in den Verdampfungselementen ausgebildeten Mikrokanalstrukturen können alleine oder zusammen mit angrenzenden Batteriezellen die Mikrokanäle bilden, so dass die Verdampfungsvorrichtung bereits mit einem Verdampfungselement funktional ist. Die Verdampfungsvorrichtung kann durch die Anzahl der Verdampfungselemente in ihrer Kühlleistung skaliert werden, wenn beispielsweise jedes Verdampfungselement die gleiche Anzahl Mikrokanalstrukturen aufweist. Die Skalierung kann beispielsweise erfolgen, indem Verdampfungselemente entlang nur einer Längsseite der Batteriezellen oder entlang beider Längsseiten der Batteriezellen angeordnet sind. Davon unabhängig ist die Skalierung der Kühlleistung abhängig von der Anzahl der im montierten Zustand gebildeten Mikrokanäle sowie deren Abmessungen. Das wenigstens eine Verdampfungselement ist vorzugsweise zur Anordnung mit wenigstens einer seiner Seitenflächen entlang einer oder mehrerer Batteriezellen ausgeführt.

Die Mikrokanalstrukturen sind beispielsweise reihenartig in dem wenigstens einen Verdampfungskörper ausgebildet, beispielsweise in einer einzigen Reihe oder in einer Mehrzahl Reihen. Das wenigstens eine Verdampfungselement weist typischerweise eine Längserstreckung auf, in welcher die Mikrokanalstrukturen reihenartig angeordnet sind. In Querrichtung, d.h. zwischen Seitenflächen des wenigstens einen Verdampfungselements, weist das wenigstens eine Verdampfungselement eine geringe Ausdehnung auf. Das wenigstens eine Verdampfungselement ist typischerweise längsseitig in dem Kontakt mit einer oder mehreren angrenzenden Batteriezellen in der Traktionsbatterie. Der Verdampfungskörper weist typischerweise eine ähnliche oder größere vertikale Erstreckung wie/als die Batteriezellen auf, um einen möglichst großflächigen Kontakt dazwischen zu realisieren. Die Mikrokanalstrukturen erstrecken sich vorzugsweise über eine gesamte vertikale Ausdehnung der Batteriezellen, um die Mikrokanäle mit einer großen Ausdehnung in vertikaler Richtung bereitzustellen.

In der erfindungsgemäßen Ausführungsform sind die Mehrzahl Mikrokanalstrukturen zu wenigstens einer Seitenfläche des jeweiligen Verdampfungselements geöffnet, und die Mikrokanäle sind im montierten Zustand durch die Anordnung des Verdampfungselements mit wenigstens einer seiner Seitenflächen entlang einer oder mehrerer Batteriezellen ausgebildet. Die Mehrzahl Mikrokanalstrukturen können zumindest teilweise in einem Randbereich des Verdampfungskörpers angeordnet sein und bilden zusammen mit zumindest einer jeweils angrenzenden Batteriezelle die Mikrokanäle. Zumindest einige der Mehrzahl Mikrokanalstrukturen werden also im montierten Zustand von den aufgenommenen Batteriezellen unter Bildung der Mikrokanäle verschlossen, so dass das Fluid in den Mikrokanälen unmittelbar in Kontakt mit den Batteriezellen kommt. Entsprechend kann das Fluid in den Mikrokanälen die von den Batteriezellen abgegebene Wärme unmittelbar und damit sehr effizient aufnehmen. Die Wärme wird in dieser Ausführungsform zumindest teilweise von den Batteriezellen unmittelbar an das flüssige Fluid übertragen. Bei einem direkten Kontakt zwischen dem flüssigen Fluid mit den Batteriezellen, d.h. einer zu kühlenden Oberfläche, ergibt sich eine hohe Anpassungsfähigkeit der Kühlvorrichtung an die Batteriezellen und damit einhergehender Toleranzen ihrer Oberflächen. Für einen Wärmeübergang zwischen zwei festen Körpern ist es demgegenüber erforderlich, Flächen mit hoher Genauigkeit und geringen Toleranzen zu fertigen, um über einen möglichst vollflächigen Kontakt einen guten Wärmeübergang zu erreichen.

Um die Mikrokanäle auszubilden ist es erforderlich, dass zwischen dem Verdampfungskörper und der Batteriezelle bzw. den Batteriezellen ein Durchtritt von Fluid verhindert wird. Dies kann einerseits erreicht werden, indem die Batteriezelle oder die Batteriezellen in unmittelbarem mechanischen Kontakt mit dem jeweiligen Verdampfungskörper sind. Dadurch kann eine Abstützung der Batteriezellen an dem jeweiligen Verdampfungskörper erfolgen, so dass dieser zur strukturellen Integrität der Traktionsbatterie beitragen kann. Somit können auf einfache Weise Batteriemodule gebildet werden, in denen Batteriezellen und Verdampfungselemente benachbart angeordnet sind. Dabei kann es ausreichend sein, wenn ein teilweiser mechanischer Kontakt zwischen der Batteriezelle oder den Batteriezellen und dem jeweiligen Verdampfungskörper besteht. Alternativ kann ein geringer Abstand zwischen den Batteriezellen und dem wenigstens einen Verdampfungselement vorliegen, wobei der Abstand so gering gewählt ist, dass ein Durchtritt von flüssigem Fluid zwischen dem Verdampfungskörper und den Batteriezellen verhindert wird. Durch den geringen Abstand zwischen den Batteriezellen und dem wenigstens einen Verdampfungselement kann keine Abstützung der Batteriezellen an dem jeweiligen Verdampfungskörper erfolgen. Entsprechend ist es bei der Bildung von Batteriemodulen, in denen Batteriezellen und Verdampfungselemente benachbart angeordnet sind, erforderlich, zusätzlich Strukturelemente anzubringen, um eine zuverlässige Positionierung der Batteriezellen in dem Batteriemodul zu erreichen und dessen strukturelle Integrität zu gewährleisten.

Für die Wärmeübertragung von den Batteriezellen unmittelbar an das flüssige Fluid ist die Wärmeleitfähigkeit des Verdampfungskörpers nicht relevant. Dadurch kann der Verdampfungskörper aus einem prinzipiell beliebigen Material hergestellt sein, beispielsweise aus einem kostengünstigen und leichten Kunststoffmaterial. Entsprechend bieten sich für die Herstellung des Verdampfungselementes bzw. des Verdampfungskörpers verschiedene Herstellungsverfahren wie beispielsweise Spritzgießen an, wodurch die Verdampfungselemente bzw. Verdampfungskörper sehr einfach und kostengünstig hergestellt werden können. In einer weiteren Ausgestaltung kann zusätzlich Wärme von den Batteriezellen an das wenigstens eine Verdampfungselement bzw. dessen Verdampfungskörper übertragen werden, die dann weiter von dem Verdampfungskörper an das flüssige Fluid übertragen wird. Um auf diesem Weg eine gute Wärmeleitung von den Batteriezellen zu dem flüssigen Fluid zu erzielen, weist das Verdampfungselement bzw. der Verdampfungskörper eine hohe Wärmeleitfähigkeit auf.

Die Mikrokanalstrukturen können jeweils zu genau einer Seitenfläche des jeweiligen Verdampfungselements geöffnet sein. Dadurch werden die entsprechenden Mikrokanäle im montierten Zustand durch die Anordnung des Verdampfungselements mit der entsprechenden Seitenfläche entlang einer oder mehrerer Batteriezellen ausgebildet. Dabei kann ein Teil der Mikrokanalstrukturen zu einer der Seitenflächen des jeweiligen Verdampfungselements geöffnet sein, und ein anderer Teil der Mikrokanalstrukturen ist zu der gegenüberliegenden Seitenfläche des Verdampfungselements geöffnet.

In einer vorteilhaften Ausführungsform sind die Mehrzahl Mikrokanalstrukturen zu beiden Seitenflächen des jeweiligen Verdampfungselements geöffnet und die Mikrokanäle sind durch die Anordnung des Verdampfungselements mit beiden Seitenflächen entlang mehrerer Batteriezellen ausgebildet. Einzelne Mikrokanalstrukturen sind also zu beiden Seitenflächen geöffnet. Die Mikrokanalstrukturen erstrecken sich also zwischen benachbarten Batteriezellen quer durch das Verdampfungselement hindurch und werden im montierten Zustand von den aufgenommenen Batteriezellen unter Bildung der Mikrokanäle verschlossen. Entsprechend kommt das Fluid in den Mikrokanälen unmittelbar in Kontakt mit den beiden jeweils benachbarten Batteriezellen und kann in den Mikrokanälen die von diesen Batteriezellen abgegebene Wärme unmittelbar aufnehmen. Es wird von beiden Seitenflächen des Verdampfungselements Wärme von den benachbarten Batteriezellen unmittelbar an das flüssige Fluid übertragen. Dabei kann sich im montierten Zustand eine Anordnung ergeben, bei der jede Seitenfläche entlang einer oder mehrerer Batteriezellen angeordnet ist. Der Verdampfungskörper hat eine Dicke, d.h. eine Ausdehnung in Querrichtung zwischen den benachbarten Batteriezellen, die eine entsprechenden Ausdehnung der Mikrokanäle entspricht. Entsprechend kann der Verdampfungskörper eine Dicke von einem Zentimeter aufweisen, vorzugsweise wenige Millimeter, besonders bevorzugt etwa zwei Millimeter.

In einer nicht erfindungsgemäßen Ausführungsform sind die Mehrzahl Mikrokanalstrukturen entlang beider Seitenflächen des jeweiligen Verdampfungselements unter Ausbildung der Mikrokanäle innerhalb des jeweiligen Verdampfungskörpers geschlossen, und der Verdampfungskörper ist im Betrieb in thermisch leitendem Kontakt mit wenigstens einer Batteriezelle. Zumindest einige der Mehrzahl Mikrokanalstrukturen bilden somit Mikrokanäle, die vollumfänglich von dem Verdampfungskörper umschlossen sind, so dass Wärme von den Batteriezellen zunächst an das wenigstens eine Verdampfungselement bzw. den Verdampfungskörper übertragen wird. Von dem Verdampfungskörper wird die Wärme weiter an das flüssige Fluid in den Mikrokanälen übertragen. Um eine gute Wärmeleitung von den Batteriezellen zu dem flüssigen Fluid zu erzielen, weist das Verdampfungselement bzw. der Verdampfungskörper vorzugsweise eine hohe Wärmeleitfähigkeit auf. Eine direkte Wärmeübertragung von den Batteriezellen zu dem Fluid erfolgt bei den so angeordneten Mikrokanälen nicht. Das Material des Verdampfungskörpers bewirkt dabei eine gleichmäßige Wärmeverteilung. Der Verdampfungskörper ist beispielsweise aus einem Metall mit einer hohen Wärmeleitfähigkeit ausgeführt.

Ein Verdampfungselement, bei dem die Mehrzahl Mikrokanalstrukturen entlang einer der beiden Seitenflächen angeordnet sind, kann beispielsweise nur mit der Seitenfläche, zu der die Mikrokanalstrukturen geöffnet sind, entlang einer oder mehrerer Batteriezellen angeordnet sein. Das Verdampfungselement kann beispielsweise als Abschlusselement eines Batteriemoduls ausgeführt sein. Ein Verdampfungselement, bei dem die Mehrzahl Mikrokanalstrukturen entlang beider Seitenflächen angeordnet sind, ist mit beiden Seitenflächen entlang einer oder mehrerer Batteriezellen angeordnet. Entsprechend kann das Verdampfungselement beispielsweise als Zwischenelement eines Batteriemoduls ausgeführt sein zur Anbringung zwischen zwei Batteriezellen.

Prinzipiell kann das Verdampfungselement verschiedenartig angeordnete und ausgeführte Mikrokanalstrukturen in Kombination aufweisen. Jede der Mikrokanalstrukturen kann individuell zu der einen oder der anderen der beiden Seitenflächen oder auch zu beiden Seitenflächen gleichzeitig geöffnet sein. Auch kann beispielsweise ein Verdampfungselement eine Mehrzahl Mikrokanalstrukturen aufweisen, wobei die Mikrokanalstrukturen nur zu einer Seitenfläche des Verdampfungselements geöffnet sind, und die Mikrokanäle sind im montierten Zustand durch die Anordnung des Verdampfungselements mit dieser Seitenfläche entlang einer oder mehrerer Batteriezellen ausgebildet.

In einer vorteilhaften Ausführungsform weist die Verdampfungsvorrichtung wenigstens ein Strukturelement auf, und das wenigstens eine Strukturelement ist zur gemeinsamen Anordnung mit wenigstens einem Verdampfungselement entlang einer oder mehrerer Batteriezellen ausgeführt. Das wenigstens eine Strukturelement ist somit gemeinsam mit wenigstens einem Verdampfungselement in einer Reihe angeordnet. Entsprechend kann das Strukturelement zur strukturellen Integrität von Batteriemodulen mit parallel zueinander angeordneten Batteriezellen beitragen, während das Verdampfungselement jeweils zur Kühlung der benachbarten Batteriezellen beiträgt. Besonders bevorzugt ist jeweils ein Strukturelement zwischen zwei Verdampfungselementen angeordnet.

In einer vorteilhaften Ausführungsform ist das wenigstens eine Verdampfungselement in einem Bereich zwischen wenigstens zwei Aufnahmepositionen für Batteriezellen angeordnet. Es ergibt sich beispielsweise eine Sandwichstruktur, in der sich in den Aufnahmepositionen aufgenommene Batteriezellen und Verdampfungselemente abwechseln. Damit wird eine maximale Kontaktfläche zwischen den Batteriezellen und den Verdampfungselementen erzielt. Eine gute Wärmeableitung und eine hohe Kühlleistung werden ermöglicht. Wenn eine geringere Wärmeableitung und Kühlleistung ausreichend sind, kann beispielsweise zwischen zwei Aufnahmepositionen für eine Batteriezelle ein Verdampfungselement angeordnet sein. Es ergibt sich im montierten Zustand eine Anordnung der Batteriezellen und Verdampfungselemente, in der auf jeweils zwei Batteriezellen ein Verdampfungselement, zwei Batteriezellen und wieder ein Verdampfungselement folgen.

In einer vorteilhaften Ausführungsform sind die Aufnahmepositionen derart für die Aufnahme von Batteriezellen angeordnet, dass die aufgenommenen Batteriezellen zumindest teilweise parallel in Reihe angeordnet sind, und das wenigstens eine Verdampfungselement ist in einem Endbereich von einer oder mehrerer Aufnahmepositionen für die Reihe der Batteriezellen angeordnet. Die Batteriezellen sind also in der Aufnahmeposition oder den Aufnahmepositionen in ihrer Längsrichtung gemeinsam so ausgerichtet, dass ihre Endbereiche beispielsweise auf einer geraden Linie liegen. Die Endbereiche, auch Kopfbereiche genannt, ermöglichen eine gemeinsame Kontaktierung mehrerer Batteriezellen durch ein Verdampfungselement, wobei ein kopfseitiger Kontakt der Batteriezellen mit dem Verdampfungselement hergestellt wird. Dadurch kann eine gemeinsame Kühlung mehrerer Batteriezellen durch ein einzelnes Verdampfungselement erfolgen. Abhängig von einer gewünschten Wärmeableitung und Kühlleistung kann beispielsweise bei jeder Reihe von Aufnahmepositionen für die Batteriezellen nur an einem Endbereich ein Verdampfungselement angeordnet sein. Alternativ kann an beiden Endbereichen jeweils ein Verdampfungselement angeordnet sein, um die Wärmeableitung und Kühlleistung demgegenüber zu erhöhen. Die hohe Kühlwirkung der Verdampfungselemente mit den Mikrokanälen ermöglicht eine Kühlung der Batteriezellen nur über ihre Kopfseite(n). Die Batteriezellen können jeweils einzeln in einer Aufnahmepositionen angeordnet sein, oder es können jeweils mehrere Batteriezellen in einer gemeinsamen Aufnahme aufgenommen sein. Eine gemeinsame Aufnahme mehrerer Batteriezellen erfolgt vorzugsweise durch Aufnahme eines Batteriemoduls mit einer Mehrzahl Batteriezellen in einer Aufnahmeposition. Die Aufnahmepositionen sind somit vorzugsweise zur gemeinsamen Aufnahme eines Batteriemoduls, in dem die Batteriezellen fest angeordnet sind, ausgeführt.

In einer vorteilhaften Ausführungsform weist das wenigstens eine Verdampfungselement eine Längserstreckung auf, die größer ist als eine Länge der zumindest teilweise in den Aufnahmepositionen in Reihe angeordneten Batteriezellen. Das Verdampfungselement erstreckt sich also entlang der Kopfseiten der in Reihe angeordneten Batteriezellen über diese Reihe hinaus. Dies ermöglicht einen Längenausgleich, da im Betrieb eine Erwärmung der Batteriezellen wie auch der Verdampfungselemente erfolgt, wodurch sich Längenänderungen ergeben können. Somit wird ein permanenter, zuverlässiger Wärmeübergang von den Batteriezellen auf das wenigstens eine Verdampfungselement gewährleistet. Beispielsweise kann sich das wenigstens eine Verdampfungselement bei der gemeinsamen Aufnahme von Batteriezellen in Form eines Batteriemoduls über die Länge des Batteriemoduls hinaus erstrecken. Ein solches Batteriemodul umfasst typischerweise Endplatten, zwischen denen die Batteriezellen gehalten sind, um eine mechanische Einheit zu bilden. Das wenigstens eine Verdampfungselement ist vorzugsweise derart ausgeführt, dass es sich zumindest bis in einen Bereich der Endplatten oder sogar darüber hinaus erstreckt.

In einer vorteilhaften Ausführungsform weist die Verdampfungsvorrichtung eine Mehrzahl Verdampfungselemente auf, die sich jeweils entlang einer Mehrzahl Batteriezellen erstrecken und im montierten Zustand benachbart zueinander angeordnet sind, wobei die Verdampfungselemente jeweils eine Mehrzahl Zwischenelemente aufweisen, die sich im montierten Zustand in vertikaler Richtung jeweils zwischen zwei benachbarten Batteriezellen erstrecken, die Zwischenelemente benachbarter Verdampfungselemente in vorgegebenen Abständen zueinander angeordnet sind, die Mikrokanalstrukturen in den vorgegebenen Abständen zwischen den Zwischenelementen der benachbarten Verdampfungselemente ausgebildet sind, und die Mikrokanäle im montierten Zustand durch die Anordnung der Verdampfungselemente entlang der Mehrzahl Batteriezellen ausgebildet sind. Durch die Ausgestaltung der Verdampfungselemente mit den Mikrokanalstrukturen zwischen den Zwischenelementen der benachbarten Verdampfungselemente sind mehrere Verdampfungselemente zur Kühlung der Batteriezellen erforderlich. Die zwischen den Verdampfungselementen ausgebildeten Mikrokanalstrukturen bilden im montierten Zustand zusammen mit angrenzenden Batteriezellen die Mikrokanäle. Die Verdampfungsvorrichtung kann durch die Anzahl der gebildeten Mikrokanalstrukturen sowie deren Abmessungen und Ausgestaltungen in ihrer Kühlleistung skaliert werden. Dabei wird typischerweise durch die Anzahl der Verdampfungselemente die Anzahl der Mikrokanalstrukturen erhöht, wenn die Verdampfungselemente zur Bildung der gleichen Anzahl Mikrokanalstrukturen zwischen ihren Zwischenelementen ausgeführt sind. Die Verdampfungselemente können beispielsweise kammartig ausgeführt sein, wobei die Zwischenelemente als Zinken ausgeführt sind. Die Anordnung der Verdampfungselemente relativ zueinander gewährleistet eine Einhaltung gewünschter Abstände der Verdampfungselemente zueinander, wodurch die Mikrokanäle mit gewünschten Abmessungen ausgebildet werden. Die Zwischenelemente sind an einem Verbindungskörper gehalten. Es ist nicht erforderlich, dass alle Zwischenelemente benachbarter Verdampfungselemente beabstandet zueinander angeordnet sind.

Die Mikrokanalstrukturen sind beispielsweise reihenartig in der Verdampfungsvorrichtung angeordnet, typischerweise in einer Mehrzahl Reihen. Die Verdampfungselemente weisen eine prinzipiell beliebige Quererstreckung, d.h. eine Erstreckung in der Richtung der benachbart angeordneten Verdampfungselemente, auf. Durch die Quererstreckung der Zwischenelemente und die entsprechende Erstreckung der Mikrokanäle kann die Kühlleistung der Verdampfungsvorrichtung skaliert werden. In Längsrichtung, d.h. in der Richtung der benachbart angeordneten Batteriezellen, weisen die Verdampfungselemente vorzugsweise eine geringe Ausdehnung auf, um die Batteriezellen mit geringen Abständen zueinander anordnen zu können. Die Verdampfungselemente sind typischerweise im montierten Zustand in der Traktionsbatterie mit den Zwischenelementen innenseitig, d.h. an den den anderen Zwischenelementen des jeweiligen Verdampfungselements zugewandten Seiten, in Kontakt mit den benachbarten Batteriezellen. Die Verdampfungselemente weisen typischerweise eine größere vertikale Erstreckung als die Batteriezellen auf, um einen möglichst großflächigen Kontakt dazwischen zu realisieren. Die Mikrokanalstrukturen erstrecken sich vorzugsweise über eine gesamte vertikale Ausdehnung der Batteriezellen, um die Mikrokanäle mit einer großen Ausdehnung in vertikaler Richtung bereitzustellen. Vorzugsweise kommen die benachbarten Verdampfungselemente im montierten Zustand in Anlage miteinander, wodurch sich eine automatische Positionierung der benachbarten Verdampfungselemente zueinander ergibt.

In einer vorteilhaften Ausführungsform sind die Mehrzahl Verdampfungselemente miteinander verbunden oder über eine Koppeleinrichtung miteinander verbindbar. Es ergibt sich eine exakte Positionierung der benachbarten Verdampfungselemente zueinander. Die benachbarten Verdampfungselemente weisen vorzugsweise einen Verbindungskörper auf, an dem die Zwischenelemente gehalten sind, und die Verdampfungselemente sind an ihren Verbindungskörpern miteinander verbunden oder verbindbar.

In einer vorteilhaften Ausführungsform weisen die Mehrzahl Verdampfungselemente jeweils wenigstens einen Verbindungskörper auf, von dem sich die Zwischenelemente erstrecken, der wenigstens eine Verbindungskörper erstreckt sich im montierten Zustand entlang der Mehrzahl Batteriezellen, und der Verbindungskörper ist im montierten Zustand in vertikaler Richtung unterhalb und/oder oberhalb der Batteriezellen angeordnet. Es ergibt sich beispielsweise eine kammartige Ausgestaltung der Verdampfungselemente, wobei sich die Zwischenelemente von dem Verbindungskörper in einer Richtung erstrecken. Dabei können die Zwischenelemente der Verdampfungselemente von oben oder von unten zwischen die benachbarten Batteriezellen eingeführt sein, so dass der Verbindungskörper entsprechend oberhalb oder unterhalb der Batteriezellen angeordnet ist. Bei der Ausgestaltung der Verdampfungselemente mit zwei Verbindungskörpern erstrecken sich die Zwischenelemente zwischen den beiden Verbindungskörpern, wobei zwischen den Zwischenelementen Durchführungsöffnungen zur Durchführung der Batteriezellen gebildet sind.

In einer vorteilhaften Ausführungsform weisen die Mikrokanäle zumindest teilweise eine Oberflächenstruktur auf, an der das flüssige Fluid unter Blasenbildung verdampft, wobei die Oberflächenstruktur vorzugsweise in einem unteren, dem Bodenbereich zugewandten Bereich in den Mikrokanälen ausgebildet ist. Entsprechend kann in den Mikrokanälen ein Siedeprozess des flüssigen Fluides gestartet werden. Die Blasenbildung begünstigt dabei einen Transport von flüssigem Fluid in vertikaler Richtung, so dass eine kontinuierliche innenseitige Benetzung der Mikrokanäle mit dem flüssigen Fluid erfolgt. Dadurch kann eine Überhitzungstemperatur, d.h. eine Temperaturdifferenz zwischen einer Oberfläche der Mikrokanäle und dem theoretischen Siedepunkt des Fluides bei Beginn des Siedens, reduziert werden. Vorzugsweise weist die Oberflächenstruktur eine mikroporöse Ausgestaltung mit Porengrößen im Bereich von 3-25 Mikrometern auf. Die Oberflächenstruktur kann ja nach Anordnung der Mikrokanalstrukturen an der Seitenwandung der Batteriezellen und/oder an dem Verdampfungselement ausgebildet sein. Die Oberflächenstruktur kann an den Verdampfungselementen, d.h. an durch die Verdampfungselemente gebildeten Innenflächen der Mikrokanäle, also beispielsweise an den Zwischenelementen bzw. den Strukturelementen, und/oder an den Flächen der Batteriezellen, welche die Mikrokanalstrukturen unter Bildung der Mikrokanäle verschließen, ausgebildet sein.

In einer vorteilhaften Ausführungsform weist die wenigstens eine Einlassöffnung einen Querschnitt auf, der kleiner als ein Querschnitt einer entsprechenden Mikrokanalstruktur ist. Durch die wenigstens eine Einlassöffnung tritt das flüssige Fluid in den jeweiligen Mikrokanal ein. Durch den gegenüber dem Mikrokanal reduzierten Querschnitt kann eine Begrenzung einer Durchflussmenge des Fluides in die Mikrokanäle erfolgen.

In einer vorteilhaften Ausführungsform ist die wenigstens eine Einlassöffnung als Durchgangsloch in einem Einlassbereich der jeweiligen Mikrokanalstruktur ausgeführt, oder die wenigstens eine Einlassöffnung ist als seitliche Aussparung an einem Einlassbereich der jeweiligen Mikrokanalstruktur ausgeführt. Insbesondere wenn die jeweilige Mikrokanalstruktur zur Bildung des Mikrokanals von zumindest einer Batteriezelle begrenzt wird, kann die Einlassöffnung auf einfache Weise als seitliche Aussparung an dem Einlassbereich ausgeführt sein. Die Einlassöffnung ist somit im fertig montierten Zustand teilweise von der entsprechenden Batteriezelle begrenzt. Insbesondere wenn die jeweilige Mikrokanalstruktur zur Bildung des Mikrokanals an beiden Seitenflächen von einer Batteriezelle begrenzt wird, weist der Einlassbereich vorzugsweise zwei Einlassöffnungen auf, die an den beiden Seitenflächen als seitliche Aussparungen an dem Einlassbereich ausgeführt sind. Unabhängig davon kann der Einlassbereich immer eine Mehrzahl einzelner Einlassöffnungen aufweisen. Der Einlassbereich kann beispielsweise einen plattenartigen Abschluss des jeweiligen Mikrokanals auf der dem Bodenbereich des Gehäusekörpers zugewandten Seite des Mikrokanals bilden. Der Einlassbereich weist in vertikaler Richtung, d.h. in Längsrichtung des Mikrokanals, vorzugsweise eine geringe Dicke bzw. Materialstärke auf. Allerdings weist der Einlassbereich in vertikaler Richtung vorzugsweise eine Dicke von wenigstens etwa 1 mm auf. Dadurch wird eine gute Abdichtung an einer Unterseite der Batteriezellen ermöglicht. Es wird insbesondere ein Abdichten von Radien an einer Unterkannte der Zellgehäuse der Batteriezellen ermöglicht.

In einer vorteilhaften Ausführungsform ist das wenigstens eine Verdampfungselement als Einsetzelement zum Einsetzen in den Gehäusekörper ausgeführt. Die Ausgestaltung als Einsetzelement ermöglicht eine einfache Montage in dem Gehäusekörper. Außerdem kann auch ein einfacher Austausch des wenigstens einen Verdampfungselements erfolgen. Auch kann die Herstellung der Verdampfungselemente unabhängig von der Herstellung der Traktionsbatterien bzw. Gehäusevorrichtungen erfolgen, indem diese nachträglich darin eingesetzt werden. In vorteilhafter Ausgestaltung erfolgt das Einsetzen des wenigstens einen Verdampfungselements in vertikaler Richtung, d.h. von einer Oberseite hin zu dem Bodenbereich der Gehäusevorrichtung. Vorzugsweise ist das wenigstens eine Verdampfungselement als Einschubelement zum Einschieben in den Gehäusekörper ausgeführt. Weiter bevorzugt erfolgt eine Befestigung des wenigstens einen Verdampfungselements an dem Gehäusekörper im eingesetzten Zustand, entweder unmittelbar oder beispielsweise über den Aufnahmepositionen für die Batteriezellen. Weiterhin sind an dem Gehäusekörper und/oder an dem wenigstens einen Verdampfungselement Halteelemente bzw. Positionierungselemente vorgesehen, um das wenigstens eine Verdampfungselement in dem Gehäusekörper zu positionieren und/oder zu befestigen. Insbesondere weist das wenigstens eine Verdampfungselement an einer Oberseite ein Anschlagelement auf, das das Einsetzen des wenigstens einen Verdampfungselements begrenzt. Das Anschlagelement kommt beispielsweise beim Einsetzen des wenigstens einen Verdampfungselements mit Oberseiten der in angrenzenden Aufnahmepositionen aufgenommenen Batteriezellen in Anlage.

In einer vorteilhaften Ausführungsform ist die Verdampfungsvorrichtung zur Abstützung von Batteriezellen gegeneinander oder von Batteriezellen an dem Gehäusekörper ausgeführt. Bei einer Traktionsbatterie ist auch eine strukturelle Festigkeit erforderlich, um beispielsweise Anforderungen an Unfallsicherheit zu erfüllen. Dazu ist eine feste Anordnung der Batteriezellen innerhalb des Gehäusekörpers vorteilhaft. Durch die Ausgestaltung der Verdampfungsvorrichtung zur Abstützung von Batteriezellen gegeneinander oder von Batteriezellen an dem Gehäusekörper kann eine solche feste Positionierung der Batteriezellen erreicht werden. Mechanische Kräfte, die in den Gehäusekörper des Batteriegehäuses eingeleitet werden, können zuverlässig weitergeleitet werden. Die Verdampfungsvorrichtung hat somit zusätzlich eine strukturelle Funktion beispielsweise innerhalb von Batteriemodulen, die geschichtete Batteriezellen enthalten, oder innerhalb des Gehäusekörpers. Beispielsweise können die Verdampfungselemente jeweils zur Abstützung ausgeführt sein. Dazu kann der Verdampfungskörper der jeweiligen Verdampfungselemente Stützstege aufweisen, die sich in Querrichtung in dem Verdampfungskörper erstrecken. Die Stützstege erstrecken sich in der fertig montierten Traktionsbatterie in der Querrichtung zwischen den Seitenflächen benachbarter Batteriezellen. Entsprechend können sich die Stützstege vor dem Einbringen der Batteriezellen zwischen zwei benachbarten Aufnahmepositionen erstrecken. In Längsrichtung der Verdampfungselemente haben die Stützstege einen Anteil von vorzugsweise wenigstens 60% bis 95% einer Gesamtkontaktfläche der Verdampfungselemente mit benachbarten Batteriezellen. Der Verdampfungskörper weist vorzugsweise in seiner Querrichtung eine hohe Festigkeit und damit eine hohe Stützwirkung auf. Alternativ oder zusätzlich kann zwischen benachbarten Batteriezellen zusätzlich zu einem Verdampfungselement ein Strukturelement angeordnet sein, um die Abstützung dieser Batteriezellen gegeneinander zu bewirken. Auch die Ausgestaltung der Verdampfungselemente mit einer Mehrzahl Zwischenelementen ermöglicht die Abstützung von Batteriezellen von Batteriezellen an dem Gehäusekörper. Bei einer Ausführung der Verdampfungseinrichtung mit einer Mehrzahl Verdampfungselementen mit Zwischenelementen, zwischen denen die Mikrokanalstrukturen ausgebildet, können die Zwischenelemente eine Abstützung der Batteriezellen gegeneinander oder der Batteriezellen an dem Gehäusekörper bewirken.

In einer vorteilhaften Ausführungsform weist das wenigstens eine Verdampfungselement eine Gitterstruktur auf, wobei der Verdampfungskörper eine Mehrzahl in vertikaler Richtung verlaufende Streben aufweist. Beispielsweise können sich die Streben mit der Mehrzahl Mikrokanalstrukturen abwechseln, wobei sich zwischen benachbarten Streben Verbindungselemente erstrecken. Entsprechend bildet die Mehrzahl Mikrokanalstrukturen in dem Verdampfungskörper Mikrokanäle, die sich in Querrichtung durch das Verdampfungselement erstrecken und sich beispielsweise mit Stützelementen, die hier die Streben bilden, abwechseln. Das Verdampfungselement weist vorzugsweise eine geringe Dicke auf, um mit den Mikrokanalstrukturen in Kontakt mit den angrenzenden Batteriezellen die Mikrokanäle auszubilden. Es erfolgt eine beidseitige Kontaktierung des entsprechenden Verdampfungselements durch die angrenzenden Batteriezellen. Die Erstreckung der Verbindungselemente zwischen zwei Streben erfolgt in Längsrichtung des entsprechenden Verdampfungselements beispielsweise durch die Mikrokanalstrukturen hindurch. Alternativ können sich die Verbindungselemente um die Mikrokanalstrukturen herum erstrecken, beispielsweise als endseitige Platte. Die Verbindungselemente bewirken eine Positionierung und ein Halten der Streben. Alternativ können die Streben als Zwischenelemente ausgeführt sein, so dass zwischen den Zwischenelementen Freiräume zur Aufnahme der Batteriezellen ausgebildet sind.

In einer vorteilhaften Ausführungsform weist die Gehäusevorrichtung eine Abstützplatte auf, die sich in horizontaler Richtung in dem Gehäusekörper erstreckt und eine vertikale Abstützung für die Batteriezellen und/oder die Verdampfungsvorrichtung bildet, wobei die Abstützplatte wenigstens einen Fluiddurchlass zwischen einem darunter befindlichen Plenum und der Mehrzahl Mikrokanalstrukturen aufweist. Durch die Abstützplatte kann die Festigkeit der Gehäusevorrichtung erhöht werden. Außerdem wird eine Befestigung der Batteriezellen und der Verdampfungsvorrichtung in dem Gehäusekörper vereinfacht. Die Fluiddurchlässe in der Abstützplatte sind vorzugsweise größer als die Querschnitte der mit den Mikrokanalstrukturen gebildeten Mikrokanäle, um ein einfaches Nachströmen des flüssigen Fluides in die Mikrokanäle zu ermöglichen. Die Anordnung der Fluiddurchlässe in der Abstützplatte erfolgt vorzugsweise in Übereinstimmung mit einer Anordnung bzw. Positionierung der Mikrokanalstrukturen. Dabei können einzelne Fluiddurchlässe zur Verbindung von mehreren Mikrokanalstrukturen mit dem unter der Abstützplatte in dem Bodenbereich ausgebildeten Plenum dienen. Das Plenum ist ein Bereich in dem Bodenbereich des Gehäusekörpers, der von der Abstützplatte nach oben begrenzt ist. Die Fluiddurchlässe sind vorzugsweise als Schlitze in der Abstützplatte ausgeführt. Die Ausrichtung der Fluiddurchlässe kann in einer in Richtung parallel oder quer zu einer reihenweisen Ausrichtung der Mikrokanalstrukturen der Verdampfungsvorrichtung erfolgen.

In einer vorteilhaften Ausführungsform bildet das Verdampfungselement einen Wandungsbereich des Gehäusekörpers. Das Verdampfungselement bildet somit einen strukturellen Bestandteil der Gehäusevorrichtung. Durch einen Verzicht auf eine zusätzliche Wandung in dem Wandungsbereich kann die Gehäusevorrichtung insgesamt mit einem geringen Gewicht und geringen Abmessungen hergestellt werden. Vorzugsweise weist das Verdampfungselement zusätzlich Kühlelemente, insbesondere Kühlrippen, auf, die sich außenseitig an der Gehäusevorrichtung erstrecken, d.h. in eine Richtung entgegengesetzt zu dem Innenraum.

In einer vorteilhaften Ausführungsform weist die Gehäusevorrichtung wenigstens ein Füllelement auf, das in dem von dem Gehäusekörper umschlossenen Innenraum angeordnet ist. Dadurch können Totvolumina, wie sie beispielweise durch die Befestigung der Batteriezellen in dem Gehäusekörper entstehen können, reduziert werden, um das Gesamtgewicht der Traktionsbatterie im Betrieb durch die Reduzierung des verwendeten Fluides zu reduzieren. Dies gilt insbesondere bei der Anbringung von Modulendplatten von Batteriemodulen mit einer Mehrzahl Batteriezellen in dem Gehäusekörper. Die Modulendplatten weisen verglichen mit den Batteriezellen oft nur eine geringe Erstreckung in vertikaler Richtung und in Querrichtung auf, wodurch sich entsprechende Totvolumina ergeben können. Durch das wenigstens eine Füllelement kann eine Gesamtmenge erforderlichen Fluides zur Aufnahme in dem von dem Gehäusekörper umschlossenen Innenraum reduziert werden. Dabei weist das wenigstens eine Füllelement besonders bevorzugt eine Dichte auf, die geringer als eine Dichte des Fluides im flüssigen Zustand ist. Das Füllelement ist vorzugsweise aus einem Schaumstoff, beispielsweise EPP (Expandierfähiges Polypropylen), hergestellt, insbesondere mit geschlossenen Zellen. Alternativ ist das Füllelement mit wenigstens einem inneren Hohlraum ausgeführt, so dass es nur ein geringes Gesamtgewicht aufweist. Der innere Hohlraum ist weiter bevorzugt gasgefüllt, insbesondere luftgefüllt. Alternativ kann der innere Hohlraum einen gegenüber Normaldruck reduzierten Innendruck aufweisen bis hin zu einem Vakuum. Es kann eine Verteilung des flüssigen Fluides in dem Bereich des Füllelements verhindert werden, wodurch sich ein freies Gesamtvolumen in der Gehäusevorrichtung und damit eine benötigte Gesamtmenge des Fluides reduziert. Vorzugsweise ist das Füllelement derart angeordnet, dass es im Betrieb zumindest teilweise in das flüssige Fluid eingetaucht ist.

In einer vorteilhaften Ausführungsform sind an dem Gehäusekörper ein Auslass für verdampftes, gasförmiges Fluid und ein Einlass für kondensiertes, flüssiges Fluid ausgebildet. Dies ermöglicht einen Anschluss an eine Kondensierungsvorrichtung, so dass das verdampfte Fluid außerhalb der Gehäusevorrichtung effizient kondensieren kann. Einlass und Auslass sind vorzugsweise als Stutzen in dem Gehäusekörper ausgeführt.

Alternativ kann innerhalb des Gehäusekörpers eine Kondensierungsvorrichtung angeordnet sein, beispielsweise als Wärmetauscher, der an einem oberen Bereich des Gehäusekörpers angeordnet ist. Insbesondere ist die Kondensierungsvorrichtung integraler Bestandteil des Gehäusekörpers. Kondensiertes Fluid kann somit in flüssigem Zustand einfach in den Bodenbereich, auf die Batteriezellen und/oder auf die Verdampfungsvorrichtung zurücktropfen.

In einer vorteilhaften Ausführungsform weist die Traktionsbatterie eine Füllung mit flüssigem Fluid auf, die einem Füllverhältnis eines Gesamtsystems bei einer Systemtemperatur von 50°C von 20-60 Volumenprozent, vorzugsweise 30-40 Volumenprozent, bezogen auf ein Gesamtvolumen des Gesamtsystems aufweist. Dadurch kann gegenüber konventionellen Immersionskühlungen, bei denen zu kühlende Komponenten vollständig in das flüssige Fluid eingetaucht sind, eine Reduktion einer Menge des verwendeten Fluides erreicht werden. Entsprechend kann die Traktionsbatterie mit einem geringen Gewicht bereitgestellt werden. Das Gesamtsystem umfasst zusätzlich zur der Traktionsbatterie typischerweise wenigstens eine Kondensierungsvorrichtung, die außerhalb der Gehäusevorrichtung angeordnet ist, und Verbindungsschläuche zwischen der Gehäusevorrichtung und der wenigstens einen Kondensierungsvorrichtung. Ggf. kann das Gesamtsystem einen Vorratsbehälter aufweisen, der allerdings nicht zum Gesamtvolumen des Gesamtsystems beiträgt. Durch das angegebene Füllverhältnis kann beispielsweise bereits vor einem Siedebetrieb, in dem das Fluid in den Mikrokanälen verdampft und durch das Mitreißen von flüssigem Fluid eine Benetzung der Mikrokanäle bewirkt, ein ausreichender Wärmetransport weg von den Batteriezellen erreicht werden. Im Siedebetrieb erfolgt durch das Sieden des flüssigen Fluides in den Mikrokanälen und das Aufsteigen des verdampften Fluides in den Mikrokanälen eine gute, vorzugsweise vollständige innenseitige Benetzung der Mikrokanäle, so dass diese benetzten Bereiche der Mikrokanäle zur Kühlung der Batteriezellen beitragen. Entsprechend kann am oberen Ende der Mikrokanäle beim Austritt eine Dampfqualität des Fluides von über 10% erreicht werden. Insgesamt kann die Kühlwirkung der Verdampfungsvorrichtung zu jeder Zeit sichergestellt werden. Die Befüllung der Traktionsbatterie mit flüssigem Fluid ist prinzipiell unabhängig von einer möglichen Befüllung der Mikrokanäle mit flüssigem Fluid. Beides kann unabhängig voneinander eingestellt werden.

In einer vorteilhaften Ausführungsform weist die Traktionsbatterie einen Qualitätssensor auf, der zumindest im Betrieb in Kontakt mit dem Fluid ist, und wenigstens eine elektrische Eigenschaft des Fluides, insbesondere eine elektrische Durchschlagsspannung und/oder eine elektrische Leitfähigkeit des Fluides, erfasst. Durch die Überwachung der wenigstens einen elektrischen Eigenschaft des Fluides kann die Funktion des Kühlsystems sichergestellt werden. Insbesondere können z.B. Kurzschlüsse aufgrund von einer erhöhten elektrischen Leifähigkeit des Fluides verhindert werden, wenn beispielsweise das flüssige Fluid unmittelbar die in der Gehäusevorrichtung aufgenommenen Batteriezellen umströmt. Die Überwachung der wenigstens einen elektrischen Eigenschaft des Fluides kann im flüssigen Zustand oder auch im gasförmigen Zustands des Fluides erfolgen, d.h. in einer Flüssigkeits- oder Dampfphase des Fluides. Der Qualitätssensor ist vorzugsweise ausgeführt oder wird von einem Controller angesteuert, die wenigstens eine elektrische Eigenschaft des Fluides zu überwachen und bei Bedarf ein Signal auszugeben, dass das die Qualität des Fluides, d.h. die wenigstens eine elektrische Eigenschaft, beeinträchtigt ist, so dass das Fluid aufgefüllt und/oder ausgetauscht werden kann, um die Qualität des Fluides im Betrieb sicherzustellen. Dazu kann der Qualitätssensor beispielsweise ausgeführt sein, beim Unterschreiten einer vorgegebenen Durchschlagsspannung, beispielsweise etwa 3KV/mm, und/oder beim Überschreiten einer vorgegebenen elektrischen Leitfähigkeit, beispielsweise etwa 10⁻¹⁵ S/m, ein entsprechendes Signal auszugeben. Besonders bevorzugt können dabei Signale für mehrere Grenzwerte der Durchschlagsspannung und/oder der elektrischen Leitfähigkeit ausgegeben werden, um unterschiedliche Warnungen in Bezug auf die Qualität des Fluides auszugeben. Alternativ erfolgt eine kontinuierliche Erfassung eines oder mehrerer Werte für die wenigstens eine elektrische Eigenschaft, die dann an eine Steuerungseinheit des Fahrzeugs oder der Traktionsbatterie ausgegeben und dort weiter verarbeitet werden. Alternativ oder zusätzlich kann eine elektrische Eigenschaft des Fluides mit dem Qualitätssensor erfasst werden, und eine andere elektrische Eigenschaft des Fluides wird daraus abgeleitet. So kann beispielsweise durch vorhergehende Versuche/Berechnungen eine Korrelation zwischen verschiedenen elektrischen Eigenschaften des Fluides ermittelt werden, so dass die eine elektrische Eigenschaft des Fluides mit dem Qualitätssensor erfasst werden kann, und die andere elektrische Eigenschaft des Fluides daraus abgeleitet werden kann. Der Qualitätssensor kann dabei so positioniert sein, dass er immer in Kontakt mit dem Fluid ist, oder nur im Betrieb, beispielsweise, wenn das Fluid in seiner gasförmigen Phase in der Gehäusevorrichtung vorliegt, und der Qualitätssensor damit in Kontakt kommt.

In einer vorteilhaften Ausführungsform ist der Qualitätssensor an oder in der Gehäusevorrichtung angebracht. Besonders bevorzugt ist der Qualitätssensor in dem Bodenbereich des Gehäusekörpers zur Aufnahme des flüssigen Fluides angeordnet, wodurch im Betrieb ein kontinuierlicher Kontakt des Qualitätssensors mit dem flüssigen Fluid sichergestellt ist.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische, teilweise Darstellung einer erfindungsgemäßen Traktionsbatterie gemäß einer ersten Ausführungsform der vorliegenden Erfindung mit einer Gehäusevorrichtung, einer Mehrzahl Batteriezellen und einem in der Gehäusevorrichtung eingebrachten flüssigen Fluid;
- Figur 2:: eine schematische Darstellung eines Verdampfungselements der Gehäusevorrichtung der ersten Ausführungsform aus Figur 1 mit Mikrokanalstrukturen zur Bildung von Mikrokanälen und in der Gehäusevorrichtung eingebrachtem Fluid mit zwei Varianten der Einlassbereiche;
- Figur 3:: eine schematische, teilweise Darstellung einer Traktionsbatterie gemäß einer zweiten Ausführungsform der vorliegenden Erfindung mit einer Gehäusevorrichtung, einer Mehrzahl Batteriezellen, die zu einem Batteriemodul verbunden sind, und einem in der Gehäusevorrichtung eingebrachten flüssigen Fluid;
- Figur 4:: eine schematische, teilweise Darstellung des Batteriemoduls aus Figur 3 mit einer Mehrzahl Batteriezellen, die zwischen Modulendplatten gehalten sind, und einem daran angrenzenden Verdampfungselement;
- Figur 5:: eine schematische, teilweise Darstellung einer Traktionsbatterie gemäß einer dritten Ausführungsform der vorliegenden Erfindung mit einer Gehäusevorrichtung, einer Mehrzahl Batteriezellen und einem in der Gehäusevorrichtung eingebrachten flüssigen Fluid in drei Ansichten;
- Figur 6:: eine schematische Darstellung eines Verdampfungselements einer vierten Ausführungsform basierend auf dem Verdampfungselement der Gehäusevorrichtung der ersten Ausführungsform aus Figur 1, das hier als Modulabschlusselement ausgeführt ist;
- Figur 7:: eine schematische teilweise Darstellung eines Batteriemoduls einer Traktionsbatterie gemäß einer fünften Ausführungsform der vorliegenden Erfindung mit einer Anordnung von zwei Verdampfungselementen jeweils in Übereinstimmung mit dem Verdampfungselement aus Figur 2 und einem Strukturelement, die in einer Reihe zwischen zwei Batteriezellen angeordnet sind;
- Figur 8:: eine schematische teilweise Darstellung einer Verdampfungsvorrichtung einer Traktionsbatterie gemäß einer sechsten Ausführungsform der vorliegenden Erfindung, wobei die Verdampfungsvorrichtung eine Mehrzahl kammartiger Verdampfungselement mit Stützelementen aufweisen, wobei zwischen benachbarten Stützelementen eines Verdampfungselements eine Batteriezelle angeordnet ist, und zwischen Stützelementen benachbarter Verdampfungselemente Mikrokanalstrukturen zur Bildung von Mikrokanälen ausgebildet sind; und
- Figur 9:: eine schematische Darstellung einer Verdampfungsvorrichtung einer Traktionsbatterie gemäß einer siebten Ausführungsform der vorliegenden Erfindung mit Zwischenelementen, zwischen denen in der einen Ebenenrichtung Batteriezellen angeordnet sind und zwischen denen in der anderen Ebenenrichtung Mikrokanalstrukturen zur Bildung von Mikrokanälen angeordnet sind.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

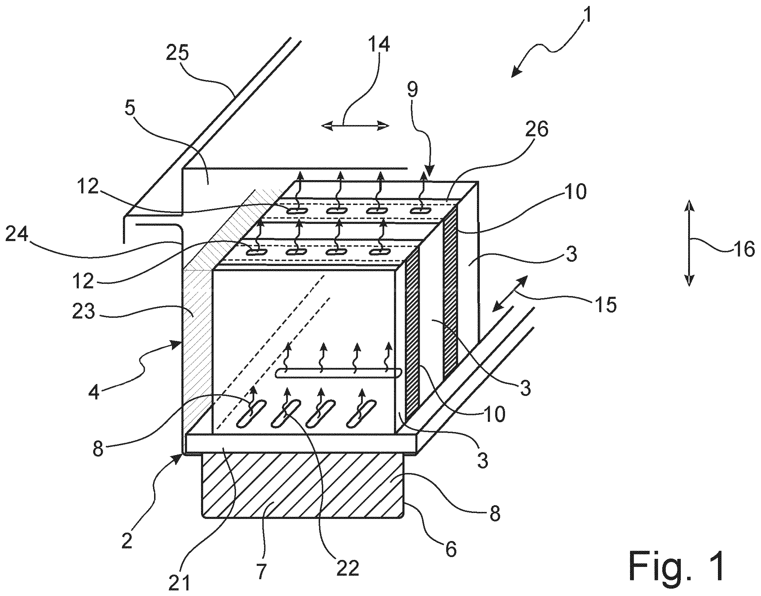

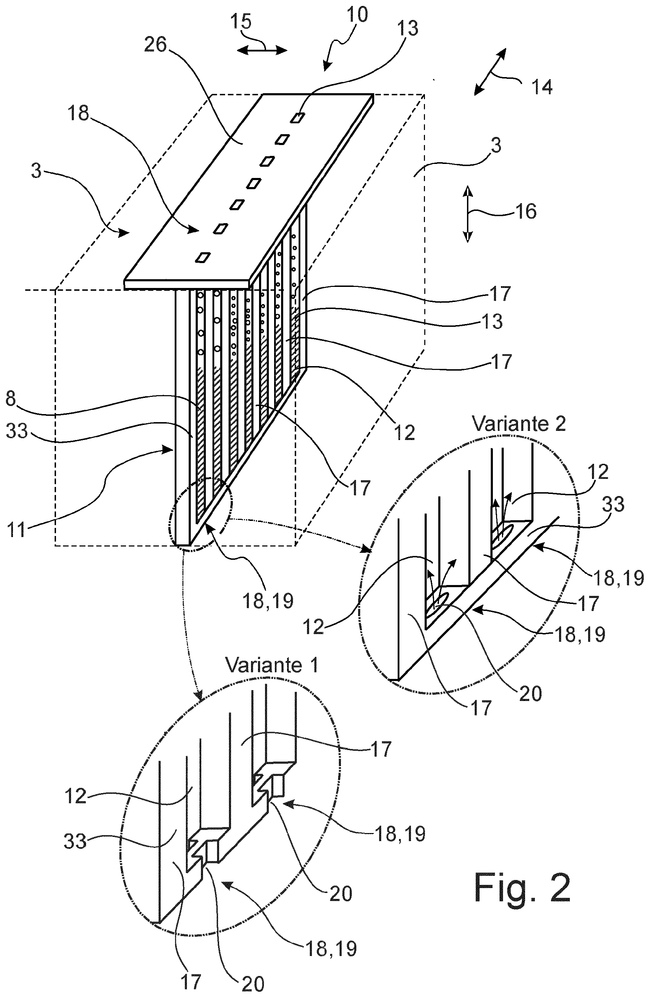

Figuren 1 und 2 betreffen eine Traktionsbatterie 1 und eine Gehäusevorrichtung 2 gemäß einer ersten Ausführungsform der vorliegenden Erfindung. Die Gehäusevorrichtung 2 ist Teil der Traktionsbatterie 1.

Die Traktionsbatterie 1 ist eine Traktionsbatterie 1 für ein elektrisch antreibbares Fahrzeug und umfasst eine fluidbasierte Kühlung, wie nachstehend im Detail dargelegt wird. Die Traktionsbatterie 1 ist eine Hochleistungsbatterie, die mit Spannungen von bis zu mehreren hundert Volt oder sogar bis zu 1000 Volt sowie Lade- und Entladeströmen von mehreren hundert Ampere bis hin zu 1000 Ampere betrieben wird.

Die Traktionsbatterie 1 umfasst weiterhin eine Mehrzahl Batteriezellen 3. Die Gehäusevorrichtung 2 umfasst außerdem einen Gehäusekörper 4, der einen Innenraum 5 mit einer Mehrzahl Aufnahmepositionen zur Aufnahme der Batteriezellen 3 bildet. Figur 1 zeigt die in dem Innenraum 5 des Gehäusekörpers 4 der Gehäusevorrichtung 2 aufgenommen Batteriezellen 3. Die Batteriezellen 3 sind in diesem Ausführungsbeispiel jeweils einzeln in den nicht dargestellten Aufnahmepositionen aufgenommen. Die Aufnahmepositionen definieren jeweils eine Position einer Batteriezelle 3. Den Aufnahmepositionen können optional individuelle Montage- oder Haltemittel zur Aufnahme, Befestigung oder Halterung der Batteriezellen 3 darin zugeordnet sein. Aktuelle Batteriezellen 3 solcher Traktionsbatterien 1 sind beispielsweise in Lithium-Ionen Technik hergestellt und arbeiten vorzugsweise in einem Temperaturbereich von beispielsweise 15° bis 40°C bei einer großen Temperaturhomogenität mit einer Temperaturschwankung von 2 - 4°C innerhalb der und zwischen den Batteriezellen 3.

Der Gehäusekörper 4 der Gehäusevorrichtung 2 weist einen Bodenbereich 6 auf, der zur Aufnahme von flüssigem Fluid 8 ausgeführt ist. Bei der in Figur 1 dargestellten Traktionsbatterie 1 ist das flüssige Fluid 8 in dem Bodenbereich 6 des Gehäusekörpers 4 aufgenommen. Das flüssige Fluid 8 ist ein dielektrisches Fluid, das in der Traktionsbatterie 1 verwendet wird und entsprechend in die Gehäusevorrichtung 2 eingebracht ist. Das flüssige Fluid 8 ist elektrisch nicht leitfähig, so dass eine elektrische Isolierung der Batteriezellen 3 gebildet wird. Das dielektrische Fluid 8 hat eine Siedetemperatur von 10°C bis 80°C bei Umgebungsdruck.

Die Gehäusevorrichtung 2 der ersten Ausführungsform umfasst weiterhin einer Verdampfungsvorrichtung 9 mit einer Mehrzahl einzelner Verdampfungselemente 10, die im Betrieb in Kontakt mit den in die Aufnahmepositionen eingeführten und darin aufgenommenen Batteriezellen 3 sind. Die Verdampfungsvorrichtung 9 ist ein Wärmeübertrager oder Wärmetauscher, in dem Wärme von den Batteriezellen 3 an das flüssige Fluid 8 übertragen wird, so dass dieses verdampfen kann, wie nachstehend im Detail ausgeführt ist. Die einzelnen Verdampfungselemente 10 können dabei verteilt angeordnet sein.

In dem ersten Ausführungsbeispiel ist jeweils in einem Bereich zwischen zwei Aufnahmepositionen für Batteriezellen 3 ein Verdampfungselement 10 angeordnet. Es ergibt sich eine Sandwichstruktur, in der sich Aufnahmepositionen für Batteriezellen 3 und Verdampfungselemente 10 abwechseln. Entsprechend sind in der Traktionsbatterie 1 die in den Aufnahmepositionen aufgenommenen Batteriezellen 3 und die Verdampfungselemente 10 abwechselnd angeordnet. Eines der Verdampfungselemente 10 des ersten Ausführungsbeispiels ist beispielhaft in Figur 2 dargestellt.

Das in Figur 2 dargestellte Verdampfungselement 10 umfasst einen Verdampfungskörper 11 mit einer Mehrzahl Mikrokanalstrukturen 12 zur Bildung von Mikrokanälen 13. Die Mikrokanalstrukturen 12 sind in einer einzelnen Reihe in dem Verdampfungskörper 11 ausgebildet. Der Verdampfungskörper 11 ist aus einem elektrisch nicht leitfähigen Material hergestellt.

Jedes der Verdampfungselemente 10 weist eine Längserstreckung auf, d.h. eine Erstreckung in einer Längsrichtung 14, in welcher die Mikrokanalstrukturen 12 reihenartig angeordnet sind. In Querrichtung 15, d.h. zwischen Seitenflächen 33 des Verdampfungselements 10, weist das Verdampfungselement 10 eine geringe Ausdehnung auf. Die Verdampfungselemente 10 sind längsseitig in Kontakt mit jeweils 2 benachbarten Batteriezellen 3 der Traktionsbatterie 1, wie in Figur 1 dargestellt ist. Dabei weisen die Batteriezellen 3 und die Verdampfungselemente 10 eine ähnliche vertikale Erstreckung auf.

Die Verdampfungselemente 10 sind in diesem Ausführungsbeispiel als Einsetzelemente zum Einsetzen in den Gehäusekörper 4 ausgeführt. Insbesondere sind die Verdampfungselemente 10 als Einschubelemente ausgeführt. Das Einsetzen bzw. Einschieben der Verdampfungselemente 10 erfolgt in diesem Ausführungsbeispiel in vertikaler Richtung 16, d.h. von einer Oberseite hin zu dem Bodenbereich 6 der Gehäusevorrichtung 2. Die eingeführten Verdampfungselemente 10 sind auf nicht dargestellte Weise an dem Gehäusekörper 4 befestigt. Auch weist jedes Verdampfungselement 10 an seiner Oberseite ein Anschlagelement 26 auf, das das Einsetzen der Verdampfungselemente 10 begrenzt. Das Anschlagelement 26 kommt beim Einsetzen der Verdampfungselemente 10 mit Oberseiten von in den Aufnahmepositionen aufgenommenen Batteriezellen 3 in Anlage, wie in Figur 1 dargestellt ist.

Die Mikrokanalstrukturen 12 erstrecken sich in einer vertikalen Richtung 16 in dem Verdampfungskörper 11. Entsprechend weisen die Mikrokanalstrukturen 12 eine Haupterstreckungsrichtung auf, die mit der vertikalen Richtung 16 übereinstimmt. Zusätzlich können sich die Mikrokanalstrukturen 12 auch in einer anderen Richtung erstrecken. Es ist nicht erforderlich, dass sich die Mikrokanalstrukturen 12 geradlinig in der vertikalen Richtung 16 erstrecken. Die Mikrokanalstrukturen 12 erstrecken sich über eine gesamte vertikale Ausdehnung der Verdampfungselemente 10 und damit entsprechend auch über eine gesamte vertikale Erstreckung der Batteriezellen 3.

Die Mikrokanalstrukturen 12 sind zu beiden Seitenflächen 33 der Verdampfungselemente 10 geöffnet und erstrecken sich zwischen den gegenüberliegenden Seitenflächen 33 des jeweiligen Verdampfungselements 10. Die Mikrokanalstrukturen 12 erstrecken sich somit in Querrichtung 15 durch das jeweilige Verdampfungselement 10. Die Mikrokanäle 13 sind im montierten Zustand durch die Anordnung des Verdampfungselements 10 mit seinen Seitenflächen 33 entlang einer oder mehrerer Batteriezellen 3 ausgebildet. Die zu beiden Seitenflächen 33 des Verdampfungselements 10 geöffneten Mikrokanalstrukturen 12 werden also im montierten Zustand von den an die Seitenflächen 33 angrenzenden Batteriezellen 3 begrenzt und darüber hinaus verschlossen. Dadurch kann das flüssige Fluid 8 in den Mikrokanälen 13 unmittelbar in Kontakt mit den Batteriezellen 3 kommen. Die Mikrokanäle 13 sind an ihren Enden in vertikaler Richtung 16 geöffnet und in Umfangsrichtung im montierten Zustand, wenn die Batteriezellen 3 in den Aufnahmepositionen aufgenommen sind, geschlossen, wodurch die Mikrokanäle 13 vollständig ausgebildet sind.

Die Verdampfungselemente 10 sind aus einem kostengünstigen und leichten Kunststoffmaterial in einem Herstellungsverfahren wie beispielsweise Spritzgießen hergestellt. Dabei weisen die Verdampfungselemente 10 eine geringe Dicke zwischen ihren beiden Seitenflächen 33 auf, d.h. die Erstreckung der Verdampfungselemente 10 in Querrichtung 15 zwischen den Seitenflächen 33 ist gering, beispielsweise etwa ein Zentimeter, vorzugsweise wenige Millimeter, besonders bevorzugt etwa zwei Millimeter. Die Dicke der Verdampfungselemente 10, im Detail des Verdampfungskörpers 11, definiert die Erstreckung der darin gebildeten Mikrokanäle 13 in der Querrichtung 15.

Die Mikrokanäle 13 weisen einen rechteckigen oder quadratischen Querschnitt auf. Die Mikrokanäle 13 weisen in diesem Ausführungsbeispiel Seitenlängen von weniger als einem Zentimeter, insbesondere von weniger als fünf Millimetern, beispielsweise von etwas zwei Millimetern auf.

Die Mikrokanäle 13 weisen zumindest teilweise eine Oberflächenstruktur auf, an der das flüssige Fluid 8 unter Blasenbildung verdampft, wobei die Oberflächenstruktur vorzugsweise in einem unteren, dem Bodenbereich 6 zugewandten Bereich in den Mikrokanälen 13 ausgebildet ist. Die Oberflächenstruktur weist eine mikroporöse Ausgestaltung mit Porengrößen im Bereich von 3-25 Mikrometern auf. Die Oberflächenstruktur ist sowohl an dem Verdampfungskörper 11 wie auch an den Batteriezellen 3 ausgebildet.

Der Verdampfungskörper 11 jedes der Verdampfungselemente 10 ist als Stützelement zur Abstützung der Batteriezellen 3 gegeneinander ausgeführt. Die Verdampfungselemente 10 haben somit eine strukturelle Funktion innerhalb des Gehäusekörpers 4. Mechanische Kräfte, die in den Gehäusekörper 4 des Batteriegehäuses 2 eingeleitet werden, können zuverlässig weitergeleitet werden. Der Verdampfungskörper 11 umfasst entsprechende Stützstege 17, im Weiteren auch als Streben 17 bezeichnet, die sich in Querrichtung 15 in dem Verdampfungskörper 11 erstrecken, d.h. in der fertig montierten Traktionsbatterie 1 erstrecken sich die Stützstege 17 in der Querrichtung 15 zwischen Längsseiten benachbarter Batteriezellen 3. In diesem Ausführungsbeispiel haben die Stützstege 17 in Längsrichtung 14 der Verdampfungselemente 10 einen Anteil von vorzugsweise nicht mehr als 10% bis 20% einer Gesamtkontaktfläche der Verdampfungselemente 10 mit den benachbarten Batteriezellen 3. Entsprechend weisen Mikrokanalstrukturen 12, die in dem Randbereich des jeweiligen Verdampfungselements 10 ausgeführt sind, in Längsrichtung der Verdampfungselemente 10 einen Anteil von vorzugsweise etwa 80% bis 90% der Gesamtkontaktfläche mit den benachbarten Batteriezellen 3 auf. Der Verdampfungskörper 11 weist somit in seiner Querrichtung 15 eine hohe Festigkeit und damit eine hohe Stützwirkung auf.

Durch diesen Aufbau wird das entsprechende Verdampfungselement 10 mit einer Gitterstruktur gebildet, wobei die Stützstege 17 sich als in vertikaler Richtung 16 verlaufende Streben mit den Mikrokanalstrukturen 12 abwechseln. Das Verdampfungselement 10 weist vorzugsweise eine geringe Dicke auf, um mit den Mikrokanalstrukturen 12 in Kontakt mit den angrenzenden Batteriezellen 3 die Mikrokanäle 13 auszubilden. Es erfolgt eine beidseitige Kontaktierung an den Seitenflächen 33 des jeweiligen Verdampfungselements 10 durch die angrenzenden Batteriezellen 3.

Zusätzlich erstrecken sich zwischen benachbarten Streben 17 Verbindungselemente 18. Die Erstreckung der Verbindungselemente 18 zwischen zwei Streben 17 erfolgt in Längsrichtung 14 des entsprechenden Verdampfungselements 10 in einem in vertikaler Richtung 16 dem Bodenbereich 6 zugewandten Ende durch die Mikrokanalstrukturen 12 hindurch. An dem in vertikaler Richtung 16 dem Bodenbereich 6 abgewandten Ende des Verdampfungselements 10 dient das Anschlagelement 26 gleichzeitig als Verbindungselement. Die Verbindungselemente 18, 26 bewirken eine Positionierung und ein Halten der Streben 17. Die Verbindungselemente 18 sind in diesem Ausführungsbeispiel an dem in vertikaler Richtung 16 oberen und unteren Ende der Mikrokanalstrukturen 12 ausgebildet.

Die Mikrokanalstrukturen 12 weisen an ihrer dem Bodenbereich 6 des Gehäusekörpers 4 zugewandten Seite, d.h. an ihren in vertikaler Richtung 16 unteren Ende, jeweils einen Einlassbereich 19 mit zwei Einlassöffnungen 20 auf. Die Einlassöffnungen 20 weisen einen Querschnitt auf, der kleiner ist als ein jeweiliger Querschnitt einer zugehörigen Mikrokanalstruktur 12. Vorzugsweise weisen die Einlassöffnungen 20 einen Querschnitt auf, der etwa einem Viertel des Querschnittes des jeweiligen Mikrokanals 13 entspricht. Das in vertikaler Richtung 16 untere Verbindungselement 18 bildet in diesem Ausführungsbeispiel gleichzeitig den Einlassbereich 19.

Der Einlassbereich 19 bildet einen plattenartigen Abschluss des jeweiligen Mikrokanals 13 auf der dem Bodenbereich 6 des Gehäusekörpers 4 zugewandten Seite des Mikrokanals 13. Der Einlassbereich 19 weist in vertikaler Richtung 16 eine Dicke von wenigstens etwa 1 mm auf. Gemäß Variante 1, die in Figur 2 entsprechend dargestellt ist, sind die Einlassöffnungen 20 als seitliche Aussparungen an dem Einlassbereich 19 ausgeführt. Die Einlassöffnungen 20 sind somit im fertig montierten Zustand teilweise von den entsprechenden angrenzenden Batteriezellen 3 begrenzt. Die Einlassöffnungen 20 können alternativ als Durchgangslöcher in dem Einlassbereich 19 ausgeführt sein, wie in Figur 2 als Variante 2 dargestellt ist.

Zusätzlich umfasst die Gehäusevorrichtung 2 eine Abstützplatte 21, die sich in einer horizontalen Ebene in dem Gehäusekörper 4 erstreckt und eine vertikale Abstützung für die Batteriezellen 3 und die Verdampfungselemente 10 bildet. Wie in Figur 1 dargestellt ist, sind in der Abstützplatte 21 mehrere Schlitze 22 als Fluiddurchlässe zwischen einem unter der Abstützplatte 21 befindlichem Plenum 7 und den Mikrokanalstrukturen 12 gebildet. Die Anordnung der Fluiddurchlässe 22 in der Abstützplatte 21 erfolgt in diesem Ausführungsbeispiel in Übereinstimmung mit einer Anordnung und Positionierung der Mikrokanalstrukturen 12, wobei einzelne Fluiddurchlässe 22 mehrere Mikrokanalstrukturen 12 mit dem Plenum 7 verbinden. In diesem Ausführungsbeispiel ist die Ausrichtung der Fluiddurchlässe 22 in einer in Richtung quer zu der Ausrichtung der Verdampfungselemente 10. Die Fluiddurchlässe 22 in der Abstützplatte 21 sind vorzugsweise größer als die Querschnitte der mit den Mikrokanalstrukturen 12 gebildeten Mikrokanäle 13. Das Plenum 7 wird durch einen Teil des Bodenbereichs 6 gebildet, in dem flüssiges Fluid 8 aufgenommen ist.

Zusätzlich weist die Gehäusevorrichtung 2 ein in Figur 1 dargestelltes Füllelement 23 auf, das in dem von dem Gehäusekörper 4 umschlossenen Innenraum 5 zur Reduzierung von Totvolumina angeordnet ist. Das Füllelement 23 weist eine Dichte auf, die geringer ist als eine Dichte des flüssigen Fluides 8. Das Füllelement 23 ist vorzugsweise aus einem Schaumstoff, beispielsweise EPP (Expandierfähiges Polypropylen), hergestellt, insbesondere mit geschlossenen Zellen. Alternativ ist das Füllelement 23 als Hohlkörper mit einem inneren Hohlraum ausgeführt, so dass es nur ein geringes Gesamtgewicht aufweist. Der innere Hohlraum ist bevorzugt gasgefüllt, insbesondere luftgefüllt. Alternativ kann der innere Hohlraum einen gegenüber Normaldruck reduzierten Innendruck aufweisen bis hin zu einem Vakuum. Das Füllelement 23 ist so angeordnet, dass es im Betrieb zumindest teilweise in das flüssige Fluid 8 eingetaucht ist und dieses verdrängt, wodurch ein Pegel des flüssigen Fluides 8 in dem Bodenbereich 6 steigt.

Des Weiteren sind an dem Gehäusekörper 4 ein Auslass für verdampftes, gasförmiges Fluid und ein Einlass für kondensiertes, flüssiges Fluid 8 ausgebildet, die in den Figuren nicht dargestellt sind. Über den Auslass und den Einlass ist die Traktionsbatterie 1 mit einer nicht dargestellten Kondensierungsvorrichtung verbunden, in der verdampftes Fluid außerhalb der Gehäusevorrichtung 2 kondensiert wird. Einlass und Auslass sind vorzugsweise als Stutzen in dem Gehäusekörper 4 ausgeführt.

Wie außerdem in Figur 1 dargestellt ist, umfasst der Gehäusekörper 4 eine Unterschale 24 und eine Oberschale 25, die nach dem Einbringen der Batteriezellen 3, der Verdampfungsvorrichtung 9, der Abstützplatte 21 und des Füllelements 23 lösbar oder nicht lösbar miteinander verbunden werden, um den Gehäusekörper 4 zu bilden. Das flüssige Fluid 8 kann ebenfalls vor dem Verbinden von Unter- und Oberschale 24, 25 oder nachträglich über den Einlass oder den Auslass in die Gehäusevorrichtung 2 eingebracht werden.

Nachfolgend wird die Funktion zur Kühlung der Traktionsbatterie 1 erläutert. Durch den Aufbau der Gehäusevorrichtung 2 und der Traktionsbatterie 1 und die entsprechende Füllung mit flüssigem Fluid 8 zusammen mit der an die Traktionsbatterie 1 angeschlossene Kondensierungsvorrichtung wird eine zwei-Phasen Immersionskühlung gebildet, wie sich im Detail aus der nachstehenden Beschreibung ergibt.

Die Traktionsbatterie 1 weist eine teilweise Füllung mit flüssigem Fluid 8 auf, das sich in einem Ruhezustand in dem Bodenbereich 6 befindet. Das flüssige Fluid 8 wird eingefüllt, bis ein Füllverhältnis eines Gesamtsystems bei einer Systemtemperatur von 50°C von 20-60 Volumenprozent, vorzugsweise 30-40 Volumenprozent, bezogen auf ein Gesamtvolumen des Gesamtsystems erreicht ist. Das Gesamtsystem umfasst zusätzlich zur der Traktionsbatterie 1 die außerhalb der Gehäusevorrichtung 2 angeordnete Kondensierungsvorrichtung und Verbindungsschläuche zwischen der Gehäusevorrichtung 2 und der Kondensierungsvorrichtung.

In diesem Ausführungsbeispiel steht durch das vorgegebene Füllverhältnis das flüssige Fluid 8 teilweise in den Mikrokanälen 13, so dass zumindest dieser Teil der Mikrokanäle 13 seine Kühlwirkung bereits entfalten kann. Das flüssige Fluid 8 ist in Figur 1 aus Gründen der Übersichtlichkeit lediglich im Plenum 7 dargestellt. Das flüssige Fluid 8 tritt dabei durch die Fluiddurchlässe 22 und die Einlassöffnungen 20 aus dem Plenum 7 in die Mikrokanäle 13 ein, so dass die Mikrokanäle 13 in ihrem in vertikaler Richtung 16 unteren Bereich im Betrieb teilweise mit dem flüssigen Fluid 8 gefüllt sind. Die Mikrokanalstrukturen 12 sind also mit ihrem in vertikaler Richtung 16 unteren Bereich teilweise in das flüssige Fluid 8 eingetaucht, wodurch ein Fluidkontakt der Mikrokanäle 13 mit dem flüssigen Fluid 8 hergestellt wird. In einer alternativen Ausführungsform steht kein flüssiges Fluid 8 in den Mikrokanälen 13.

Im Betrieb, d.h. beim Laden oder Entladen der Traktionsbatterie 1, entsteht in den Batteriezellen 3 Wärme. Die Wärme wird teilweise von den Batteriezellen 3 über ihre Seitenwände direkt an das flüssige Fluid 8 in den Mikrokanälen 13 übertragen. Zusätzlich wird Wärme in geringem Umfang von den Seitenwänden der Batteriezellen 3 an die angrenzenden Verdampfungselemente 10 bzw. deren Verdampfungskörper 11 übertragen. Diese Wärme wird dann weiter von dem jeweiligen Verdampfungskörper 11 über die Mikrokanäle 13 an das flüssige Fluid 8 übertragen.

Das angegebene Füllverhältnis bewirkt in diesem Ausführungsbeispiel, dass bereits vor einem Siedebetrieb eine Benetzung der Mikrokanäle 13 mit dem flüssigen Fluid 8 erfolgt. Im Siedebetrieb wird durch das Sieden des flüssigen Fluides 8 in den Mikrokanälen 13 und das Aufsteigen des verdampften Fluides in den Mikrokanälen 13 flüssiges Fluid 8 mitgerissen, dass die Innenseiten der Mikrokanäle 13 benetzt. Dadurch wird eine gute, vorzugsweise vollständige innenseitige Benetzung der Mikrokanäle 13 erreicht, so dass die benetzten Bereiche zur Kühlung der Batteriezellen 3 beitragen. Im Betrieb erfolgt ein Wärmetransport von den Batteriezellen 3 in das flüssige Fluid 8, so dass das flüssige Fluid 8 in den Mikrokanälen 13 verdampft.

Ein Nachfördern von flüssigem Fluid 8 in die Mikrokanäle 13 erfolgt, indem das flüssige Fluid 8 durch die Einlassöffnung 20 bzw. die Einlassöffnungen 20 aus dem Bodenbereich 6 des Gehäusekörpers 4 in die Mikrokanäle 13 strömt, wobei in diesem Ausführungsbeispiel verdampftes Fluid 8 ersetzt wird.

Nach dem Verdampfen wird das gasförmige Fluid 8 über den Auslass in die Kondensierungsvorrichtung geleitet. Dort kondensiert das gasförmige Fluid unter Abgabe von Wärme an die Umgebung. Es wird ein idealerweise geschlossener Fluidkreislauf gebildet. Das kondensierte Fluid kehrt über den Einlass in die Gehäusevorrichtung 2 zurück. Es kann eine aktive oder passive Zirkulation des Fluides 8 erfolgen.

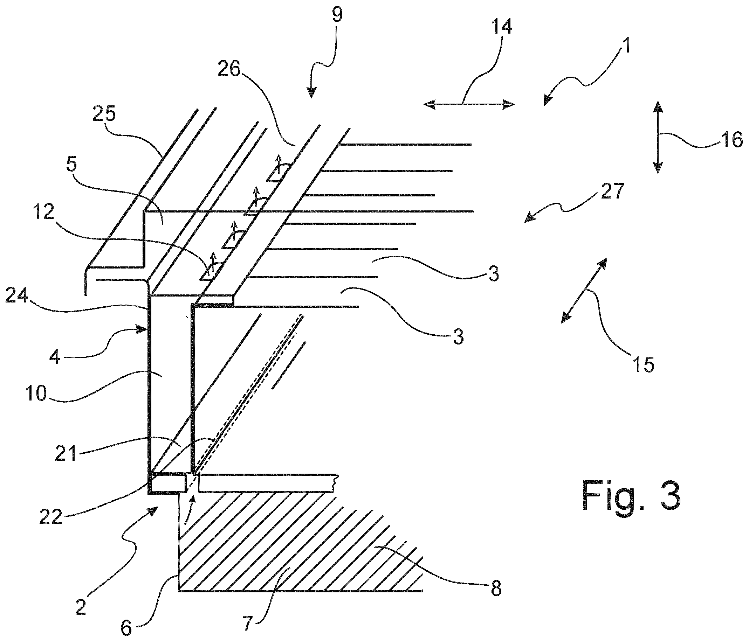

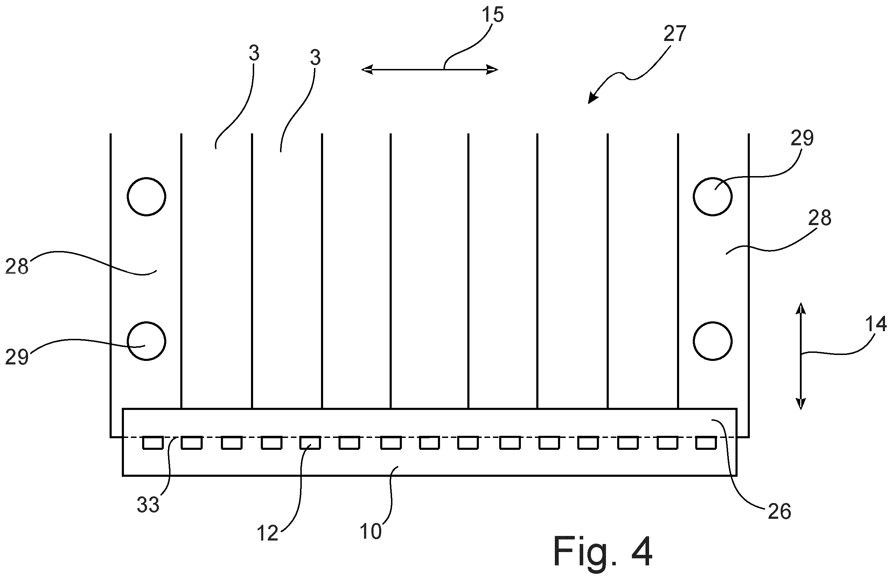

Die Figuren 3 und 4 betreffen eine Traktionsbatterie 1 und eine Gehäusevorrichtung 2 gemäß einer zweiten Ausführungsform der vorliegenden Erfindung. Die Gehäusevorrichtung 2 ist auch hier Teil der Traktionsbatterie 1.

Traktionsbatterie 1 und Gehäusevorrichtung 2 der ersten und zweiten Ausführungsform sind weitgehend identisch ausgeführt, weshalb nachstehend im Wesentlichen Unterschiede zwischen der Traktionsbatterie 1 und der Gehäusevorrichtung 2 der ersten und zweiten Ausführungsform beschrieben werden. Entsprechend werden für gleichartige oder identische Bauteile die gleichen Bezugszeichen verwendet. Nicht angegebene Details der Traktionsbatterie 1 und der Gehäusevorrichtung 2 der zweiten Ausführungsform entsprechen, soweit erforderlich, im Zweifel denen der ersten Ausführungsform.

Wie in den Figuren 3 und 4 dargestellt ist, sind bei der zweiten Ausführungsform die Batteriezellen 3 zu Batteriemodulen 27 mit jeweils mehreren Batteriezellen 3 zusammengefasst, und in den Aufnahmepositionen ist jeweils ein Batteriemodul 27 aufgenommen. Entsprechend werden in jeder Aufnahmeposition mehrere Batteriezellen 3 gemeinsam aufgenommen. Das Batteriemodul 27 umfasst zwei Endplatten 28, die entlang von Seitenwänden von äußeren Batteriezellen 3 angeordnet sind. Die Endplatten 28 fassen die Batteriezellen 3 zu dem Batteriemodul 27 zusammen und fixieren die einzelnen Batteriezellen 3 darin. In dem Batteriemodul 27 sind die Batteriezellen 3 mit ihren Seitenwänden jeweils benachbart angeordnet. Ein Verdampfungselement 10 ist in einem Endbereich der Batteriezellen 3 des Batteriemoduls 27 angeordnet. Die Batteriezellen 3 sind also in ihrer Längsrichtung 14 in der Aufnahmeposition wie auch in dem Batteriemodul 27 gemeinsam ausgerichtet, so dass ihre Endbereiche auf einer geraden Linie liegen. Es wird somit in der Traktionsbatterie 1 ein kopfseitiger Kontakt der Batteriezellen 3 des Batteriemoduls 27 mit dem dort angeordneten Verdampfungselement 10 hergestellt.

Entsprechend sind bei dem Verdampfungselement 10 der zweiten Ausführungsform im Gegensatz zu dem Verdampfungselement 10 der ersten Ausführungsform die Mikrokanalstrukturen 12 lediglich zu einer der beiden Seitenflächen 33 der Verdampfungselemente 10 geöffnet und erstrecken sich von dieser Seitenfläche 33 in Querrichtung 15 in das jeweilige Verdampfungselement 10 hinein. Die Mikrokanäle 13 sind im montierten Zustand durch die Anordnung des Verdampfungselements 10 mit der entsprechenden Seitenfläche 33 entlang der Batteriezellen 3 ausgebildet. Die Seitenfläche 33 des Verdampfungselements 10 mit den geöffneten Mikrokanalstrukturen 12 wird also im montierten Zustand von den an die Seitenfläche 33 angrenzenden Batteriezellen 3 begrenzt und darüber hinaus verschlossen. Im Übrigen entspricht das Verdampfungselement 10 der zweiten Ausführungsform dem Verdampfungselement 10 der ersten Ausführungsform.

Wie sich insbesondere aus Figur 4 ergibt, weist das dort dargestellte Verdampfungselement 10 eine Längserstreckung auf, die größer ist als eine Länge der in dem Batteriemodul 27 angeordneten Batteriezellen 3, d.h. das Verdampfungselement 10 weist eine Längserstreckung größer als die der Batteriezellen 3 des Batteriemoduls 27 auf. Das Verdampfungselement 10 erstreckt sich also entlang der Kopfseiten der benachbart angeordneten Batteriezellen 3 des Batteriemoduls 27 über diese Anordnung hinaus. Das Batteriemodul 27 umfasst außerdem Endplatten 28, zwischen denen die Batteriezellen 3 unter Bildung einer mechanischen Einheit gehalten sind. Das jeweilige Verdampfungselement 10 ist vorzugsweise derart ausgeführt, dass es sich zumindest bis in einen Bereich der Endplatten 27 oder sogar darüber hinaus erstreckt. In den Endplatten 28 sind Befestigungslöcher 29 ausgebildet, die sich in vertikaler Richtung 16 erstrecken und durch die das Batteriemodul 27 mit nicht dargestellten Befestigungselementen an dem Gehäusekörper 4 angebracht ist.

Das Verdampfungselement 10 weist an seiner Oberseite ein Anschlagelement 26 auf, das das Einsetzen des Verdampfungselements 10 begrenzt. Das Anschlagelement 26 kommt beim Einsetzen der Verdampfungselemente 10 mit einer Oberseite der in den Aufnahmepositionen aufgenommenen Batteriezellen 3 in Anlage. Das Anschlagelement 26 dient dabei gleichzeitig als Verbindungselement, das eine Positionierung und ein Halten der Streben 17 bewirkt. Das Verbindungselement 26 ist in diesem Ausführungsbeispiel an dem in vertikaler Richtung 16 oberen Ende der Mikrokanalstrukturen 12 ausgebildet.

In einer alternativen Ausführungsform bildet das Verdampfungselement 10 einen Wandungsbereich des Gehäusekörpers 4, also einen strukturellen Bestandteil der Gehäusevorrichtung 2.

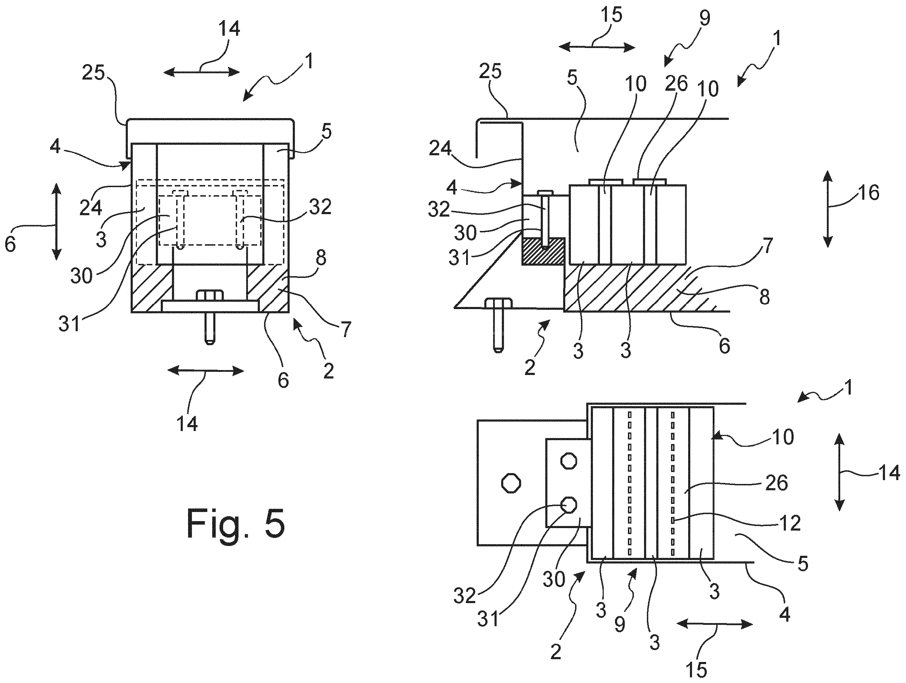

Die Figur 5 betrifft eine Traktionsbatterie 1 und eine Gehäusevorrichtung 2 gemäß einer dritten Ausführungsform der vorliegenden Erfindung. Die Gehäusevorrichtung 2 ist auch hier Teil der Traktionsbatterie 1.

Traktionsbatterie 1 und Gehäusevorrichtung 2 der ersten und dritten Ausführungsform sind weitgehend identisch ausgeführt, weshalb nachstehend Unterschiede zwischen der Traktionsbatterie 1 und der Gehäusevorrichtung 2 der ersten und dritten Ausführungsform beschrieben werden. Entsprechend werden für gleichartige oder identische Bauteile die gleichen Bezugszeichen verwendet. Nicht angegebene Details der Traktionsbatterie 1 und der Gehäusevorrichtung 2 der dritten Ausführungsform entsprechen, soweit erforderlich, im Zweifel denen der ersten Ausführungsform.

Gehäusevorrichtung 2 der ersten und dritten Ausführungsform unterscheiden sich in der Abstützung der Batteriezellen 3 und Verdampfungselemente 10 in dem Gehäusekörper 4. Die Gehäusevorrichtung 4 der dritten Ausführungsform weist keine Abstützplatte 21 auf. Stattdessen sind die Batteriezellen 3 und Verdampfungselemente 10 auf nicht dargestellte Weise gemeinsam eingefasst und mit endseitigen Halteelementen 30 an dem Gehäusekörper 4 angebracht. Dazu sind in jedem Halteelement 30 zwei Montagelöcher 31 ausgebildet, die sich in vertikaler Richtung 16 erstrecken. Die Halteelemente 30 sind mit Montageschrauben 32 durch die Montagelöcher 31 in dem Gehäusekörper 4 angeschraubt.

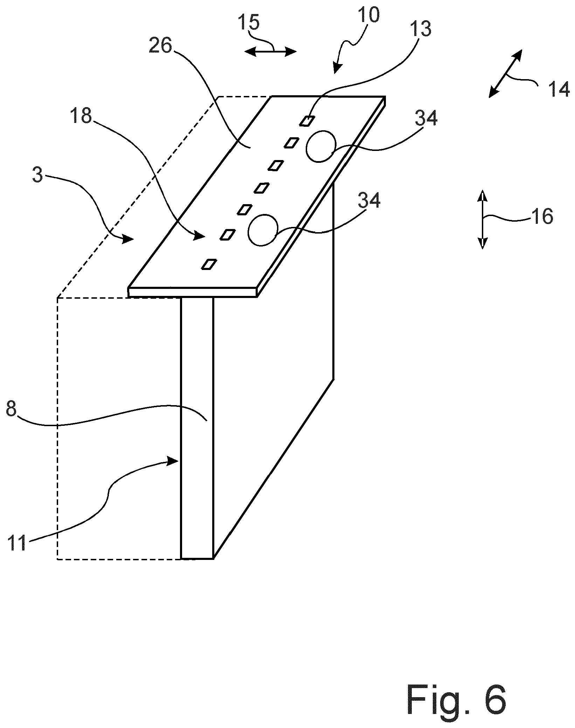

Die Figur 6 betrifft eine Traktionsbatterie 1 und eine Gehäusevorrichtung 2 gemäß einer vierten Ausführungsform der vorliegenden Erfindung. Die Gehäusevorrichtung 2 ist auch hier Teil der Traktionsbatterie 1.

Traktionsbatterie 1 und Gehäusevorrichtung 2 der ersten und vierten Ausführungsform sind weitgehend identisch ausgeführt, weshalb nachstehend Unterschiede zwischen der Traktionsbatterie 1 und der Gehäusevorrichtung 2 der ersten und vierten Ausführungsform beschrieben werden. Entsprechend werden für gleichartige oder identische Bauteile die gleichen Bezugszeichen verwendet. Nicht angegebene Details der Traktionsbatterie 1 und der Gehäusevorrichtung 2 der vierten Ausführungsform entsprechen, soweit erforderlich, im Zweifel denen der ersten Ausführungsform.

Die Traktionsbatterie 1 und Gehäusevorrichtung 2 der vierten Ausführungsform unterscheiden sich von denen der ersten Ausführungsform durch die Verwendung eines Verdampfungselements 10, das in Übereinstimmung mit dem Verdampfungselement 10 der zweiten Ausführungsform ausgeführt ist. Entsprechend sind bei dem Verdampfungselement 10 der vierten Ausführungsform die Mikrokanalstrukturen 12 lediglich zu einer der beiden Seitenflächen 33 der Verdampfungselemente 10 geöffnet und erstrecken sich von dieser Seitenfläche 33 in Querrichtung 15 in das jeweilige Verdampfungselement 10 hinein. Die Mikrokanäle 13 sind im montierten Zustand durch die Anordnung des Verdampfungselements 10 mit der entsprechenden Seitenfläche 33 entlang der Batteriezellen 3 ausgebildet. Die Seitenfläche 33 des Verdampfungselements 10 mit den geöffneten Mikrokanalstrukturen 12 wird also im montierten Zustand von den an die Seitenfläche 33 angrenzenden Batteriezellen 3 begrenzt und darüber hinaus verschlossen. Im Übrigen entspricht das Verdampfungselement 10 der zweiten Ausführungsform dem Verdampfungselement 10 der ersten Ausführungsform.

Das Verdampfungselement 10 der vierten Ausführungsform weist an seiner Oberseite ebenfalls ein Anschlagelement 26 auf, das das Einsetzen des Verdampfungselements 10 begrenzt. Das Anschlagelement 26 kommt beim Einsetzen der Verdampfungselemente 10 mit einer Oberseite der in den Aufnahmepositionen aufgenommenen Batteriezellen 3 in Anlage. Das Verbindungselement 26 ist in diesem Ausführungsbeispiel an dem in vertikaler Richtung 16 oberen Ende der Mikrokanalstrukturen 12 ausgebildet. In dem Anschlagelement 26 sind Haltelöcher 34 ausgebildet, die sich in vertikaler Richtung durch das Anschlagelement 26 erstrecken. Die Haltelöcher 34 sind in einem Bereich des Anschlagelement 26 angeordnet, der keine Batteriezelle 3 überdeckt. Somit kann mit dem Verdampfungselement 10 der vierten Ausführungsform ein Batteriemodul 27 mit mehreren benachbarten Batteriezellen 3 gebildet werden, wobei zwischen benachbarten Batteriezellen 3 jeweils ein Verdampfungselement 10 der ersten Ausführungsform angeordnet ist, und das Verdampfungselement 10 der vierten Ausführungsform als Modulabschlusselement ausgeführt ist und beide Enden des Batteriemoduls 27 bildet. Dabei kann das Batteriemodul 27 über die Haltelöcher 34 der entsprechenden Anschlagelemente 26 der Verdampfungselemente 10 der vierten Ausführungsform montiert und beispielsweise an dem Gehäusekörper 4 befestigt werden.

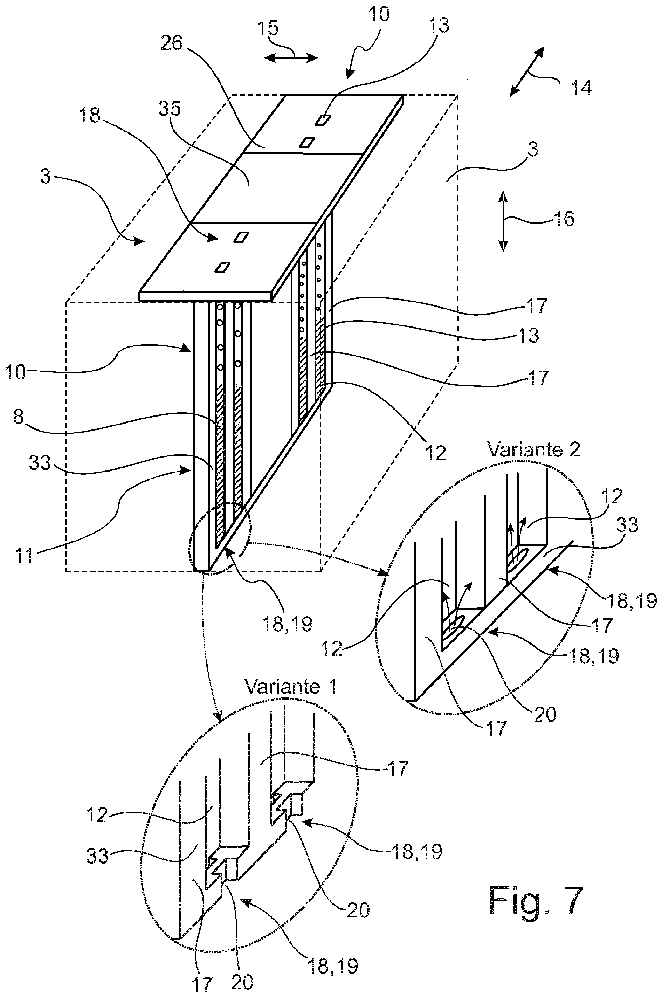

Die Figur 7 betrifft eine Traktionsbatterie 1 und eine Gehäusevorrichtung 2 gemäß einer fünften Ausführungsform der vorliegenden Erfindung. Die Gehäusevorrichtung 2 ist auch hier Teil der Traktionsbatterie 1.

Traktionsbatterie 1 und Gehäusevorrichtung 2 der ersten und fünften Ausführungsform sind weitgehend identisch ausgeführt, weshalb nachstehend Unterschiede zwischen der Traktionsbatterie 1 und der Gehäusevorrichtung 2 der ersten und fünften Ausführungsform beschrieben werden. Entsprechend werden für gleichartige oder identische Bauteile die gleichen Bezugszeichen verwendet. Nicht angegebene Details der Traktionsbatterie 1 und der Gehäusevorrichtung 2 der fünften Ausführungsform entsprechen, soweit erforderlich, im Zweifel denen der ersten Ausführungsform.

Die Traktionsbatterie 1 und Gehäusevorrichtung 2 der fünften Ausführungsform unterscheiden sich von denen der ersten Ausführungsform durch die Ausgestaltung der Verdampfungsvorrichtung 9. Auch die Verdampfungsvorrichtung 9 der fünften Ausführungsform umfasst eine Mehrzahl Verdampfungselement 10, die denen der ersten Ausführungsform entsprechen, die allerdings jeweils eine geringere Ausdehnung in Längsrichtung 14 aufweisen. Zusätzlich weist die Verdampfungsvorrichtung 9 Strukturelemente 35 auf zur gemeinsamen Anordnung zwischen jeweils zwei Verdampfungselementen 10 jeweils in Längsrichtung 14 entlang der Batteriezellen 3. Das Strukturelement 35 ist in Kontakt mit den jeweils benachbarten Batteriezellen 3, so dass eine Abstützung der Batteriezellen 3 gebildet wird. Die Verdampfungselemente 10 sind demgegenüber mit einem geringen Spiel zwischen den benachbarten Batteriezellen 3, so dass sie nicht in direktem mechanischem Kontakt damit sind. Es besteht ein geringer Abstand zwischen den Batteriezellen 3 und den Verdampfungselementen 10, wobei der Abstand so gering gewählt ist, dass ein Durchtritt von flüssigem Fluid 8 zwischen dem Verdampfungskörper 11 und den Batteriezellen 3 verhindert wird.

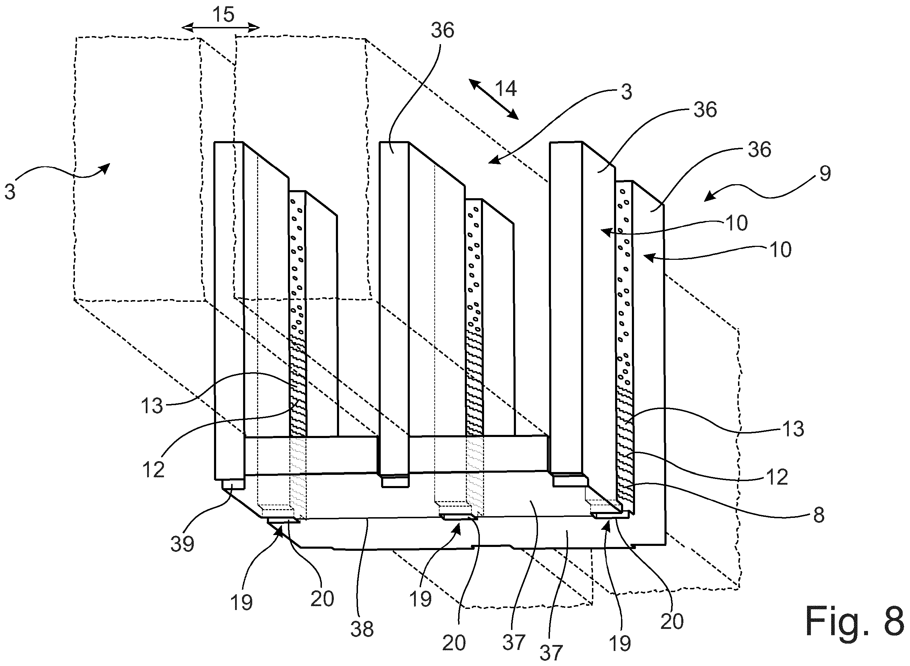

Die Figur 8 betrifft eine Traktionsbatterie 1 und eine Gehäusevorrichtung 2 gemäß einer sechsten Ausführungsform der vorliegenden Erfindung. Die Gehäusevorrichtung 2 ist auch hier Teil der Traktionsbatterie 1.

Traktionsbatterie 1 und Gehäusevorrichtung 2 der ersten und sechsten Ausführungsform sind weitgehend identisch ausgeführt, weshalb nachstehend Unterschiede zwischen der Traktionsbatterie 1 und der Gehäusevorrichtung 2 der ersten und sechsten Ausführungsform beschrieben werden. Entsprechend werden für gleichartige oder identische Bauteile die gleichen Bezugszeichen verwendet. Nicht angegebene Details der Traktionsbatterie 1 und der Gehäusevorrichtung 2 der sechsten Ausführungsform entsprechen, soweit erforderlich, im Zweifel denen der ersten Ausführungsform.

Die Traktionsbatterie 1 und Gehäusevorrichtung 2 der sechsten Ausführungsform unterscheiden sich von denen der ersten Ausführungsform durch die Ausgestaltung der Verdampfungsvorrichtung 9. Die Verdampfungsvorrichtung 9 der sechsten Ausführungsform weist eine Mehrzahl Verdampfungselemente 10 auf, die sich jeweils entlang einer Mehrzahl Batteriezellen 3 erstrecken und im montierten Zustand benachbart zueinander angeordnet sind, wobei die Verdampfungselemente 10 jeweils eine Mehrzahl Zwischenelemente 36 aufweisen, die sich von einem Verbindungskörper 37 parallel zueinander erstrecken. Im montierten Zustand erstrecken sich die Zwischenelemente 36 in vertikaler Richtung 16 jeweils zwischen zwei benachbarten Batteriezellen 3, wobei die Verbindungskörper 37 benachbarter Verdampfungselemente 10 entlang einer Kontaktkante 38 miteinander in Anlage kommen. Dadurch ergibt sich eine gewünschte Positionierung der Zwischenelemente 36 benachbarter Verdampfungselemente 10 in vorgegebenen Abständen zueinander. Die Mikrokanalstrukturen 12 sind in den vorgegebenen Abständen zwischen den Zwischenelementen 36 der benachbarten Verdampfungselemente 10 ausgebildet, so dass die Mikrokanäle 13 im montierten Zustand im Bereich der Mikrokanalstrukturen 12 durch die Anordnung jeweils benachbarter Verdampfungselemente 10 entlang jeweils benachbarter Batteriezellen 3 ausgebildet sind. Die zwischen den Verdampfungselementen 10 ausgebildeten Mikrokanalstrukturen 12 bilden somit im montierten Zustand zwischen den jeweils benachbarten Zwischenelementen 36 benachbarter Verdampfungselemente 10 zusammen mit den angrenzenden Batteriezellen 3 die Mikrokanäle 13. Zwischen den miteinander in Anlage kommenden Verbindungskörpern 37 der benachbarten Verdampfungselemente 10 sind Aussparungen 39 ausgebildet, die jeweils einen Einlassbereich 19 definieren und eine Einlassöffnung 20 für einen der Mikrokanäle 3 bilden.

Die Verdampfungselemente 10 sind in diesem Ausführungsbeispiel kammartig ausgeführt, wobei die Zwischenelemente 36 als Zinken ausgeführt und an dem Verbindungskörper 37 angeordnet sind. Die Verbindungskörper 37 sind im montierten Zustand in vertikaler Richtung 16 unterhalb der Batteriezellen 3 angeordnet. Die Mikrokanalstrukturen 12 sind in diesem Ausführungsbeispiel reihenartig in einer Mehrzahl Reihen in der Verdampfungsvorrichtung 9 angeordnet. Die Verdampfungselemente 10 weisen eine prinzipiell beliebige Quererstreckung, d.h. eine Erstreckung in der Richtung der benachbart angeordneten Verdampfungselemente 10, auf. Dies entspricht der Längsrichtung 14 bezogen auf die Batteriezellen 3. In der Richtung der benachbart angeordneten Batteriezellen 3, weisen die Verdampfungselemente 10 eine geringe Ausdehnung auf, um die Batteriezellen 3 mit geringen Abständen zueinander anordnen zu können und ein kompaktes Batteriemodul 27 bereitzustellen. Dabei sind die Verdampfungselemente 10 mit ihren Zwischenelementen 36 innenseitig, d.h. an den den anderen Zwischenelementen 36 des jeweiligen Verdampfungselements 10 zugewandten Seiten, im montierten Zustand in der Traktionsbatterie 1 in Kontakt mit den benachbarten Batteriezellen 3. Die Verdampfungselemente 10 weisen in diesem Ausführungsbeispiel eine größere vertikale Erstreckung als die Batteriezellen 3 auf. Die Mikrokanalstrukturen 12 erstrecken sich dabei über eine gesamte vertikale Ausdehnung der Batteriezellen 3.

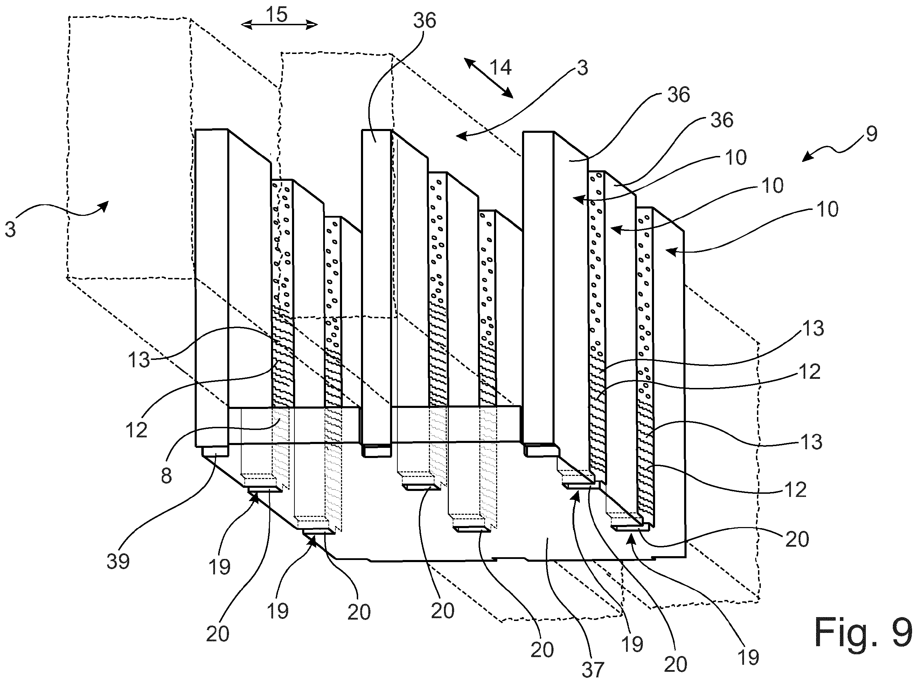

Die Figur 9 betrifft eine Traktionsbatterie 1 und eine Gehäusevorrichtung 2 gemäß einer siebten Ausführungsform der vorliegenden Erfindung. Die Gehäusevorrichtung 2 ist auch hier Teil der Traktionsbatterie 1.

Traktionsbatterie 1 und Gehäusevorrichtung 2 der sechsten und siebten Ausführungsform sind weitgehend identisch ausgeführt, weshalb nachstehend Unterschiede zwischen der Traktionsbatterie 1 und der Gehäusevorrichtung 2 der sechsten und siebten Ausführungsform beschrieben werden. Entsprechend werden für gleichartige oder identische Bauteile die gleichen Bezugszeichen verwendet. Nicht angegebene Details der Traktionsbatterie 1 und der Gehäusevorrichtung 2 der siebten Ausführungsform entsprechen, soweit erforderlich, im Zweifel denen der sechsten Ausführungsform.

Die Traktionsbatterie 1 und Gehäusevorrichtung 2 der siebten Ausführungsform unterscheiden sich von denen der sechsten Ausführungsform durch die Ausgestaltung der Verdampfungsvorrichtung 9. Die Verdampfungsvorrichtung 9 der siebten Ausführungsform ist im Wesentlichen identisch zu der Verdampfungsvorrichtung 9 der sechsten Ausführungsform. Abweichend dazu sind bei der Verdampfungsvorrichtung 9 der siebten Ausführungsform allerdings die Verdampfungselemente 10 an den Verbindungskörpern 37 miteinander verbunden, wodurch ein einteiliger Verbindungskörper 37 gebildet wird. Entsprechend ist eine einteilige Verdampfungsvorrichtung 9 bestehend aus einer Mehrzahl Verdampfungselemente 10 gebildet. Es ergibt sich eine exakte Positionierung der benachbarten Verdampfungselemente 10 zueinander. Entsprechend sind zwischen den Zwischenelementen 36 in der einen Ebenenrichtung Batteriezellen 3 angeordnet und in der anderen Ebenenrichtung Mikrokanalstrukturen 12 zur Bildung von Mikrokanälen 13.

### Bezugszeichenliste

- 1: Traktionsbatterie
- 2: Gehäusevorrichtung
- 3: Batteriezelle
- 4: Gehäusekörper
- 5: Innenraum
- 6: Bodenbereich
- 7: Plenum
- 8: flüssiges Fluid
- 9: Verdampfungsvorrichtung
- 10: Verdampfungselement
- 11: Verdampfungskörper
- 12: Mikrokanalstruktur
- 13: Mikrokanal
- 14: Längsrichtung
- 15: Querrichtung
- 16: vertikale Richtung
- 17: Stützsteg, Strebe
- 18: Verbindungselement
- 19: Einlassbereich
- 20: Einlassöffnung
- 21: Abstützplatte
- 22: Schlitz, Fluiddurchlass
- 23: Füllelement
- 24: Unterschale
- 25: Oberschale
- 26: Anschlagelement, Verbindungselement
- 27: Batteriemodul
- 28: Endplatte
- 29: Befestigungsloch
- 30: Halteelement
- 31: Montageloch
- 32: Befestigungsschraube
- 33: Seitenfläche
- 34: Halteöffnung
- 35: Strukturelement
- 36: Zwischenelement
- 37: Verbindungskörper
- 38: Kontaktkante
- 39: Aussparung

## Patentansprüche

1. Gehäusevorrichtung (2) für eine Traktionsbatterie (1) mit einer fluidbasierten Kühlung, insbesondere eines Fahrzeugs, wobei die Traktionsbatterie (1) eine Mehrzahl Batteriezellen (3) aufweist, mit
einem Gehäusekörper (4), der einen umschlossenen Innenraum (5) mit einer Mehrzahl Aufnahmepositionen zur Aufnahme der Mehrzahl Batteriezellen (3) bildet, wobei ein Bodenbereich (6) des Gehäusekörpers (4) zur Aufnahme von flüssigem Fluid (8) ausgeführt ist, und
einer Verdampfungsvorrichtung (9) zur Verdampfung des flüssigen Fluides (8), wobei
die Verdampfungsvorrichtung (9) eine Mehrzahl von Mikrokanalstrukturen (12) zur Bildung von Mikrokanälen (13) aufweist,
die Mikrokanalstrukturen (12) sich im montierten Zustand in einer vertikalen Richtung (16) erstrecken und an ihrem in vertikaler Richtung (16) unteren Bereich wenigstens eine Einlassöffnung (20) zur Aufnahme von flüssigem Fluid (8) aus dem Bodenbereich (6) des Gehäusekörpers (4) aufweisen, und
im Betrieb flüssiges Fluid (8) durch die wenigstens eine Einlassöffnung (20) in die Mikrokanäle (13) eintritt und ein Wärmetransport von den Batteriezellen (3) zu dem flüssigen Fluid (8) in den Mikrokanälen (13) erfolgt, wodurch das flüssige Fluid (8) in der Verdampfungsvorrichtung (9) verdampft, wobei
die Verdampfungsvorrichtung (9) wenigstens ein Verdampfungselement (10) aufweist, und
das wenigstens eine Verdampfungselement (10) einen Verdampfungskörper (11) mit einer Mehrzahl Mikrokanalstrukturen (12) zur Bildung der Mikrokanäle (13) aufweist,
wobei
die Mehrzahl Mikrokanalstrukturen (12) zu wenigstens einer Seitenfläche (33) des jeweiligen Verdampfungselements (10) geöffnet sind, und
die Mikrokanäle (13) im montierten Zustand durch die Anordnung des Verdampfungselements (10) mit wenigstens einer seiner Seitenflächen (33) entlang einer oder mehrerer Batteriezellen (3) ausgebildet sind.

2. Gehäusevorrichtung (2) nach Anspruch 1, **dadurch gekennzeichnet, dass**
die Mehrzahl Mikrokanalstrukturen (12) zu beiden Seitenflächen (33) des jeweiligen Verdampfungselements (10) geöffnet sind, und
die Mikrokanäle (13) durch die Anordnung des Verdampfungselements (10) mit beiden Seitenflächen (33) entlang mehrerer Batteriezellen (3) ausgebildet sind.

3. Gehäusevorrichtung (2) nach einem der Ansprüche 1 oder 2, **dadurch gekennzeichnet, dass**
die Verdampfungsvorrichtung (9) wenigstens ein Strukturelement (35) aufweist, und
das wenigstens eine Strukturelement (35) zur gemeinsamen Anordnung mit wenigstens einem Verdampfungselement (10) entlang einer oder mehrerer Batteriezellen (3) ausgeführt ist.

4. Gehäusevorrichtung (2) nach einem der vorhergehenden Ansprüche, **dadurch gekennzeichnet, dass**
das wenigstens eine Verdampfungselement (10) in einem Bereich zwischen wenigstens zwei Aufnahmepositionen für Batteriezellen (3) angeordnet ist; und/oder
die Aufnahmepositionen derart für die Aufnahme von Batteriezellen (3) angeordnet sind, dass die aufgenommenen Batteriezellen (3) zumindest teilweise parallel in Reihe angeordnet sind, und
das wenigstens eine Verdampfungselement (10) in einem Endbereich von einer oder mehrerer Aufnahmepositionen für die Reihe der Batteriezellen (3) angeordnet ist, wobei optional
das wenigstens eine Verdampfungselement (10) eine Längserstreckung aufweist, die größer ist als eine Länge der zumindest teilweise in den Aufnahmepositionen in Reihe angeordneten Batteriezellen (3).

5. Gehäusevorrichtung (2) nach einem der vorhergehenden Ansprüche, **dadurch gekennzeichnet, dass**
die Mikrokanäle (13) zumindest teilweise eine Oberflächenstruktur aufweisen, an der das flüssige Fluid (8) unter Blasenbildung verdampft, wobei die Oberflächenstruktur insbesondere in einem unteren, dem Bodenbereich (6) zugewandten Bereich in den Mikrokanälen (13) ausgebildet ist.

6. Gehäusevorrichtung (2) nach einem der vorhergehenden Ansprüche, **dadurch gekennzeichnet, dass**
die wenigstens eine Einlassöffnung (20) einen Querschnitt aufweist, der kleiner als ein Querschnitt einer entsprechenden Mikrokanalstruktur (12) ist.

7. Gehäusevorrichtung (2) nach einem der vorhergehenden Ansprüche, **dadurch gekennzeichnet, dass**
die wenigstens eine Einlassöffnung (20) als Durchgangsloch in einem Einlassbereich (19) der jeweiligen Mikrokanalstruktur (12) ausgeführt ist, oder
die wenigstens eine Einlassöffnung (20) als seitliche Aussparung an einem Einlassbereich (19) der jeweiligen Mikrokanalstruktur (12) ausgeführt ist.

8. Gehäusevorrichtung (2) nach einem der vorhergehenden Ansprüche, **dadurch gekennzeichnet, dass**
das wenigstens eine Verdampfungselement (10) als Einsetzelement zum Einsetzen in den Gehäusekörper (4) ausgeführt ist.

9. Gehäusevorrichtung (2) nach einem der vorhergehenden Ansprüche, **dadurch gekennzeichnet, dass**
die Verdampfungsvorrichtung (9) zur Abstützung von Batteriezellen (3) gegeneinander oder von Batteriezellen (3) an dem Gehäusekörper (4) ausgeführt ist.

10. Gehäusevorrichtung (2) nach Anspruch 9, **dadurch gekennzeichnet, dass**
der Verdampfungskörper (11) des wenigstens einen Verdampfungselements (10) als Stützelement zur Abstützung von Batteriezellen (3) gegeneinander oder von Batteriezellen (3) an dem Gehäusekörper (4) ausgeführt ist, wobei insbesondere
das wenigstens eine Verdampfungselement (10) eine Gitterstruktur aufweist, wobei der Verdampfungskörper (11) eine Mehrzahl in vertikaler Richtung (16) verlaufende Streben (17) aufweist.

11. Gehäusevorrichtung (2) nach einem der vorhergehenden Ansprüche, **dadurch gekennzeichnet, dass**
die Gehäusevorrichtung (2) eine Abstützplatte (21) aufweist, die sich in einer horizontalen Ebene in dem Gehäusekörper (4) erstreckt und eine vertikale Abstützung für die Batteriezellen (3) und/oder die Verdampfungsvorrichtung (9) bildet, wobei
die Abstützplatte (21) wenigstens einen Fluiddurchlass (22) zwischen einem darunter befindlichen Plenum (7) und der Mehrzahl Mikrokanalstrukturen (12) aufweist.

12. Gehäusevorrichtung (2) nach einem der vorhergehenden Ansprüche, **dadurch gekennzeichnet, dass**
das Verdampfungselement (10) einen Wandungsbereich des Gehäusekörpers (4) bildet, und/oder
die Gehäusevorrichtung (1) wenigstens ein Füllelement (23) aufweist, das in dem von dem Gehäusekörper (4) umschlossenen Innenraum (5) angeordnet ist.

13. Gehäusevorrichtung (2) nach einem der vorhergehenden Ansprüche, **dadurch gekennzeichnet, dass**
an dem Gehäusekörper (4) ein Auslass für verdampftes, gasförmiges Fluid und ein Einlass für kondensiertes, flüssiges Fluid (8) ausgebildet sind.

14. Traktionsbatterie (1) für ein Fahrzeug mit einer fluidbasierten Kühlung, umfassend
eine Gehäusevorrichtung (2) nach einem der vorhergehenden Ansprüche,
eine Mehrzahl Batteriezellen (3), die in Aufnahmepositionen in einem Innenraum (5) eines Gehäusekörpers (4) der Gehäusevorrichtung (2) aufgenommen sind, und
ein flüssiges Fluid (8), das in einem Bodenbereich (6) des Gehäusekörpers (4) aufgenommen ist.

15. Traktionsbatterie (1) nach Anspruch 14, **dadurch gekennzeichnet, dass**
die Traktionsbatterie (1) eine Füllung mit flüssigem Fluid (8) aufweist, die einem Füllverhältnis eines Gesamtsystems bei einer Systemtemperatur von 50°C von 20-60 Volumenprozent, vorzugsweise 30-40 Volumenprozent, bezogen auf ein Gesamtvolumen des Gesamtsystems aufweist; und/oder
die Traktionsbatterie (1) einen Qualitätssensor aufweist, der zumindest im Betrieb in Kontakt mit dem Fluid (8) ist, und wenigstens eine elektrische Eigenschaft des Fluides (8), insbesondere eine elektrische Durchschlagsspannung und/oder eine elektrische Leitfähigkeit des Fluides (8), erfasst.

## Claims

1. A housing device (2) for a traction battery (1) with fluid-based cooling, more particularly of a vehicle, wherein the traction battery (1) has a plurality of a battery cells (3),
the housing device comprising a housing body (4), which forms an enclosed interior (5) with a plurality of receiving positions for receiving the plurality of battery cells (3), wherein a bottom region (6) of the housing body (4) is designed to receive liquid fluid (8), and
an evaporation device (9) for evaporating the liquid fluid (8), wherein
the evaporation device (9) has a plurality of microchannel structures (12) for forming microchannels (13),
the microchannel structures (12) extend in a vertical direction (16) in the assembled state and have, in their lower region with respect to the vertical direction (16), at least one inlet opening (20) for receiving liquid fluid (8) from the bottom region (6) of the housing body (4), and
during operation, liquid fluid (8) enters the microchannels (13) through the at least one inlet opening (20) and heat is transferred from the battery cells (3) to the liquid fluid (8) in the microchannels (13), whereby the liquid fluid (8) evaporates in the evaporation device (9), wherein
the evaporation device (9) has at least one evaporation element (10) and
the at least one evaporation element (10) has an evaporation body (11) with a plurality of microchannel structures (12) for forming the microchannels (13),
wherein
the plurality of microchannel structures (12) is open at at least one side surface (33) of the respective evaporation element (10) and
the microchannels (13) are formed in the assembled state by the arrangement of the evaporation element (10) with at least one of its side surfaces (33) along one or more battery cells (3).

2. The housing device (2) according to claim 1, **characterized in that**
the plurality of microchannel structures (12) is open at both side surfaces (33) of the respective evaporation element (10) and
**in that** the microchannels (13) are formed by the arrangement of the evaporation element (10) with both side surfaces (33) along a plurality of battery cells (3).

3. The housing device (2) according to either of claims 1 or 2,
**characterized in that**
the evaporation device (9) has at least one structural element (35) and
**in that** the at least one structural element (35) is designed to be arranged, together with at least one evaporation element (10), along one or more battery cells (3).

4. The housing device (2) according to any one of the preceding claims, **characterized in that**
the at least one evaporation element (10) is arranged in a region between at least two receiving positions for battery cells (3); and/or
**in that** the receiving positions are arranged for the reception of battery cells (3) such that the received battery cells (3) are at least partly arranged parallel in rows, and
**in that** the at least one evaporation element (10) is arranged in an end region of one or more receiving positions for the row of the battery cells (3), wherein optionally
the at least one evaporation element (10) has a longitudinal extension which is greater than a length of the battery cells (3) at least partly arranged in the receiving positions in a row.

5. The housing device (2) according to any one of the preceding claims, **characterized in that**
the microchannels (13) at least partly have a surface structure at which the liquid fluid (8) evaporates, such that bubbles are formed, the surface structure more particularly being formed in a lower region in the microchannels (13) which is near the bottom region (6).

6. The housing device (2) according to any one of the preceding claims, **characterized in that**
the at least one inlet opening (20) has a cross-section which is smaller than the cross-section of a corresponding microchannel structure (12).

7. The housing device (2) according to any one of the preceding claims, **characterized in that**
the at least one inlet opening (20) is provided in the form of a through-hole in an inlet region (19) of the respective microchannel structure (12), or
**in that** the at least one inlet opening (20) is in the form of a lateral recess in an inlet region (19) of the respective microchannel structure (12).

8. The housing device (2) according to any one of the preceding claims, **characterized in that**
the at least one evaporation element (10) is provided in the form of an insertion element for insertion into the housing body (4).

9. The housing device (2) according to any one of the preceding claims, **characterized in that**
the evaporation device (9) is designed to support battery cells (3) against each other or to support battery cells (3) against the housing body (4).

10. The housing device (2) according to claim 9, **characterized in that**
the evaporation body (11) of the at least one evaporation element (10) is designed as a support element for supporting battery cells (3) against each other or for supporting battery cells (3) against the housing body (4), wherein in particular
the at least one evaporation element (10) has a bar structure, wherein the evaporation body (11) has a plurality of struts (17) running in the vertical direction (16).

11. The housing device (2) according to any one of the preceding claims, **characterized in that**
the housing device (2) has a supporting plate (21), which extends in a horizontal plane in the housing body (4) and forms a vertical support for the battery cells (3) and/or the evaporation device (9), wherein
the supporting plate (21) has at least one fluid passage (22) between a plenum (7), which is located therebelow, and the plurality of microchannel structures (12).

12. The housing device (2) according to any one of the preceding claims, **characterized in that**
the evaporation element (10) forms a wall region of the housing body (4), and/or
**in that** the housing device (1) has at least one filling element (23), which is arranged in the interior (5) enclosed by the housing body (4).

13. The housing device (2) according to any one of the preceding claims, **characterized in that**
an outlet for evaporated, gaseous fluid and an inlet for condensed, liquid fluid (8) are formed on the housing body (4).

14. A traction battery (1) for a vehicle with fluid-based cooling, comprising
a housing device (2) according to any one of the preceding claims,
a plurality of battery cells (3), which are received in receiving positions in an interior (5) of a housing body (4) of the housing device (2), and
a liquid fluid (8), which is received in a bottom region (6) of the housing body (4).

15. The traction battery (1) according to claim 14, **characterized in that**
the traction battery (1) is filled with liquid fluid (8) at a filling ratio of a whole system at a system temperature of 50°C of 20 to 60 volume percent, preferably 30 to 40 volume percent, in relation to the total volume of the whole system; and/or
**in that** the traction battery (1) has a quality sensor, which is in contact with the fluid (8) at least during operation and senses at least one electrical property of the fluid (8), more particularly the breakdown voltage and/or the electrical conductivity of the fluid (8).

## Revendications

1. Dispositif à boîtier (2) pour une batterie de traction (1) comportant un refroidissement à base de fluide, en particulier d'un véhicule, dans lequel la batterie de traction (1) présente une pluralité de cellules de batterie (3), comportant
un corps formant boîtier (4) qui forme un espace intérieur (5) fermé comportant une pluralité de positions de réception pour la réception de la pluralité de cellules de batterie (3), dans lequel une zone formant fond (6) du corps formant boîtier (4) est conçue pour recevoir un fluide liquide (8), et
un dispositif d'évaporation (9) pour l'évaporation du fluide liquide (8), dans lequel
le dispositif d'évaporation (9) présente une pluralité de structures formant microcanaux (12) pour la formation de microcanaux (13),
les structures formant microcanaux (12) s'étendent dans une direction verticale (16) à l'état monté et présentent, dans leur zone inférieure dans la direction verticale (16), au moins une ouverture d'entrée (20) pour la réception du fluide liquide (8) provenant de la zone formant fond (6) du corps formant boîtier (4), et
en fonctionnement, du fluide liquide (8) pénètre dans les microcanaux (13) à travers l'au moins une ouverture d'entrée (20) et un transport de chaleur des cellules de batterie (3) vers le fluide liquide (8) est effectué dans les microcanaux (13), moyennant quoi le fluide liquide (8) est évaporé dans le dispositif d'évaporation (9), dans lequel
le dispositif d'évaporation (9) présente au moins un élément d'évaporation (10), et
l'au moins un élément d'évaporation (10) présente un corps d'évaporation (11) comportant une pluralité de structures formant microcanaux (12) pour la formation des microcanaux (13),
dans lequel
la pluralité de structures formant microcanaux (12) sont ouvertes vers au moins une surface latérale (33) de l'élément d'évaporation (10) respectif, et
les microcanaux (13) sont réalisés à l'état monté par la disposition de l'élément d'évaporation (10) avec au moins une de ses surfaces latérales (33) le long d'un ou de plusieurs cellules de batterie (3).

2. Dispositif à boîtier (2) selon la revendication 1, **caractérisé en ce que**
la pluralité de structures formant microcanaux (12) sont ouvertes vers les deux surfaces latérales (33) de l'élément d'évaporation (10) respectif, et
les microcanaux (13) sont réalisés par la disposition de l'élément d'évaporation (10) avec les deux surfaces latérales (33) le long de plusieurs cellules de batterie (3).

3. Dispositif à boîtier (2) selon l'une des revendications 1 ou 2, **caractérisé en ce que**
le dispositif d'évaporation (9) présente au moins un élément structural (35), et
l'au moins un élément structural (35) est conçu pour être disposé conjointement avec au moins un élément d'évaporation (10) le long d'un ou de plusieurs éléments de batterie (3).

4. Dispositif à boîtier (2) selon l'une des revendications précédentes, **caractérisé en ce que**
l'au moins un élément d'évaporation (10) est disposé dans une zone entre au moins deux positions de réception pour des cellules de batterie (3) ; et/ou
les positions de réception sont disposées pour la réception de cellules de batterie (3) de telle sorte que les cellules de batterie (3) reçus sont disposés au moins partiellement en parallèle en série, et
l'au moins un élément d'évaporation (10) est disposé dans une zone d'extrémité d'une ou de plusieurs positions de réception pour la rangée de cellules de batterie (3), dans lequel, éventuellement,
l'au moins un élément d'évaporation (10) présente une extension longitudinale qui est plus grande qu'une longueur des cellules de batterie (3) disposés en série au moins partiellement dans les positions de réception.

5. Dispositif à boîtier (2) selon l'une des revendications précédentes, **caractérisé en ce que**
les microcanaux (13) présentent au moins partiellement une structure formant surface sur laquelle le fluide liquide (8) s'évapore en formant des bulles, dans lequel la structure formant surface est réalisée en particulier dans une zone inférieure, tournée vers la zone formant fond (6), dans les microcanaux (13).

6. Dispositif à boîtier (2) selon l'une des revendications précédentes, **caractérisé en ce que**
l'au moins une ouverture d'entrée (20) présente une section transversale qui est plus petite qu'une section transversale d'une structure formant microcanal (12) correspondante.

7. Dispositif à boîtier (2) selon l'une des revendications précédentes, **caractérisé en ce que**
l'au moins une ouverture d'entrée (20) est conçue sous forme de trou de passage dans une zone d'entrée (19) de la structure formant microcanal (12) respective, ou
l'au moins une ouverture d'entrée (20) est conçue sous forme d'évidement latéral sur une zone d'entrée (19) de la structure formant microcanal (12) respective.

8. Dispositif à boîtier (2) selon l'une des revendications précédentes, **caractérisé en ce que**
l'au moins un élément d'évaporation (10) est conçu sous forme d'élément d'insertion pour l'insertion dans le corps formant boîtier (4).

9. Dispositif à boîtier (2) selon l'une des revendications précédentes, **caractérisé en ce que**
le dispositif d'évaporation (9) est conçu pour supporter des cellules de batterie (3) les uns contre les autres ou des cellules de batterie (3) contre le corps formant boîtier (4).

10. Dispositif à boîtier (2) selon la revendication 9, **caractérisé en ce que**
le corps d'évaporation (11) de l'au moins un élément d'évaporation (10) est conçu sous forme d'élément de support pour supporter des cellules de batterie (3) les uns contre les autres ou des cellules de batterie (3) contre le corps formant boîtier (4), dans lequel en particulier
l'au moins un élément d'évaporation (10) présente une structure en grille, dans lequel le corps d'évaporation (11) présente une pluralité d'entretoises (17) s'étendant dans la direction verticale (16).

11. Dispositif à boîtier (2) selon l'une des revendications précédentes, **caractérisé en ce que**
le dispositif à boîtier (2) présente une plaque de support (21) qui s'étend dans un plan horizontal dans le corps formant boîtier (4) et forme un support vertical pour les cellules de batterie (3) et/ou pour le dispositif d'évaporation (9), dans lequel
la plaque de support (21) présente au moins un passage pour fluide (22) entre un plénum (7) situé en dessous et la pluralité de structures formant microcanaux (12).

12. Dispositif à boîtier (2) selon l'une des revendications précédentes, **caractérisé en ce que**
l'élément d'évaporation (10) forme une zone formant paroi du corps formant boîtier (4), et/ou
le dispositif à boîtier (1) présente au moins un élément de remplissage (23) qui est disposé dans l'espace intérieur (5) fermé par le corps formant boîtier (4).

13. Dispositif à boîtier (2) selon l'une des revendications précédentes, **caractérisé en ce que**
une sortie pour fluide gazeux évaporé et une entrée pour fluide liquide (8) condensé sont réalisées sur le corps formant boîtier (4).

14. Batterie de traction (1) pour un véhicule comportant un refroidissement à base de fluide, comprenant
un dispositif à boîtier (2) selon l'une des revendications précédentes,
une pluralité de cellules de batterie (3) qui sont reçus dans des positions de réception dans un espace intérieur (5) d'un corps formant boîtier (4) du dispositif à boîtier (2), et
un fluide liquide (8) qui est reçu dans une zone formant fond (6) du corps formant boîtier (4).

15. Batterie de traction (1) selon la revendication 14, **caractérisé en ce que**
la batterie de traction (1) présente un remplissage avec un fluide liquide (8) qui présente un rapport de remplissage d'un système global à une température système de 50 °C de 20 à 60 pour cent en volume, de préférence de 30 à 40 pour cent en volume, par rapport à un volume global du système global ; et/ou
la batterie de traction (1) présente un capteur de qualité qui, au moins en fonctionnement, est en contact avec le fluide (8) et détecte au moins une propriété électrique du fluide (8), en particulier une tension de claquage électrique et/ou une conductivité électrique du fluide (8).
